# EUROPEAN PATENT SPECIFICATION

(11) **EP 3 981 846 B1**
(45) Date of publication and mention of the grant of the patent: **17.06.2026**
(21) Application number: 20201037.7
(22) Date of filing: 09.10.2020
(51) Int. Cl.: C09D 11/101, C09D 11/322, C09D 11/38, C09D 11/40, B41M 7/00

(54) **FREE RADICAL CURABLE INKJET INKS AND INKJET PRINTING METHODS**
DURCH FREIE RADIKALE HÄRTBARE TINTENSTRAHLTINTEN UND TINTENSTRAHLDRUCKVERFAHREN
ENCRES POUR JET D'ENCRE DURCISSABLES PAR RADICAUX LIBRES ET PROCÉDÉS D'IMPRESSION PAR JET D'ENCRE

(43) Date of publication of application: 13.04.2022
(73) Proprietor: AGFA NV, 2640 Mortsel (BE)
(72) Inventor: GOETHALS, Fabienne, 2640 Mortsel (BE)
(74) Representative: Strijckers, Hans Louis P.

(56) References cited:
- WO-A1-2004/028225
- CN-A- 111 320 895
- JP-A- 2011 190 342
- JP-A- 2020 033 496

## Description

### Technical Field

The present invention relates to free radical curable inkjet inks for inkjet printing directly on glass substrates.

### Background Art

Several types of inkjet inks are known, such as aqueous inkjet inks, solvent based inkjet inks and radiation curable inkjet inks. The latter are especially suitable for printing on non-absorbing substrates. However, some non-absorbing substrates remain challenging. Glass substrates are one of these non-absorbing substrates causing adhesion problems.

One way to solve these adhesion problems is by adapting the monomer composition of the radiation curable inkjet ink. It has been found that adhesion to glass can be improved by using a monomer mixture containing two or more types of cationically polymerizable monomers, such as disclosed by EP 3611206 A (DAICEL) and EP 3623409 A (DAICEL). Upon radiation curing, such as UV curing, cationically polymerizable monomers exhibit less shrinkage than free radical polymerizable monomers, resulting in improved adhesion. However, it has been observed in industrial inkjet printing systems that cationically curable inkjet inks posed problems of jetting reliability due to UV stray light. The UV-curing of the ink caused reflections of UV light, including UV light hitting the nozzle plate of an inkjet print head and resulting into failing nozzles due to clogging by cured ink in the nozzle. Unlike free radical ink where radical species have a much shorter lifetime, the cationic curable ink continues to cure once an acid species has been generated by UV light in the nozzle.

Another approach is to include specific compounds, so-called adhesion promotors, into the inkjet ink. For example, US 2015184005 (HAPA) discloses UV curable inkjet inks containing an adhesion promotor in the form of pentaerythritol tetrakis(3-mercaptobutanoate) (PE1). Such an adhesion promotor has been found to be useful for improving adhesion on substrates other than glass. Other adhesion promotors that improve ink adhesion on glass have exhibited other issues upon their incorporation into an inkjet ink. For example, some adhesion promotors are polymeric and cause an unworkable viscosity increase or ink stability issues, making the inkjet ink unsuitable for jetting it reliably by an inkjet printer. This lead to another approach of applying a so-called primer by techniques other than inkjet technology.

Several patents disclose the application of primers and adhesion layers by coating technology other than inkjet. In EP 2417077 A (AGC GLASS EUROPE), a silane primer is used between a glass sheet and an adhesion layer for improving the adhesion of an ink layer on a glass article. The background art of this patent refers to WO 2006/138650 (EXATEC), wherein silanes, well-known as adhesion promotors for glass, were incorporated into inkjet inks but caused stability problems upon the inkjet ink, requiring it to be added immediately before the implementation of the ink, and resulting therefore in additional processing steps. As an alternative WO 2006/138650 (EXATEC) suggested to pre-coat the glass with a silane primer. However, both solutions lead to a loss in productivity, because additional handling and manipulation of the glass and/or the ink is necessary.

Further research has resulted in jettable primers exhibiting both improved ink stability and adhesion to glass. For example, WO 2019/081339 (AGFA) discloses an inkjet ink set including a colourless jettable primer, which may include an organosilane coupling agent. However, using a jettable primer results not only in an extra material cost, but also in a more complex inkjet printer as additional print heads are required. The solution for adhesion with a jettable primer could also not be incorporated into a coloured inkjet ink, because it is observed that when a colour pigment is present that inferior adhesion on glass is obtained. There are indications that the polymeric dispersant for dispersing the colour pigment is causing this inferior adhesion.

JP2011/190342 A (FUJIFILM) discloses an inkjet ink comprising 5 wt% of Viscoat 3PA, i.e. a tris acryloyloxy ethyl phosphate.

WO2004/028225 A1 (AVECIA) discloses a radiation curable inkjet ink comprising bis methacryloyloxy ethyl phosphate.

CN111320895 A (Lucky Huaguang Graphics Co) discloses radiation curable inkjet inks comprising bis methacryloyloxy ethyl phosphate. JP2020033496 A (Mitsubishi Chemical Corp) discloses a radiation curable inkjet ink comprising bis methacryloyloxy ethyl phosphate.

A need continues to exist for free radical curable inkjet inks that can be printed in a productive and reliable manner and exhibit good adhesion to glass substrates, while not requiring a primer.

### Summary of invention

In order to overcome the problems described above, preferred embodiments of the present invention have been realized with a free radical curable inkjet ink as claimed and defined here below.

It was surprisingly found that by controlling three aspects of an adhesion promotor that improved adhesion on glass was obtained for free radical curable inkjet inks containing a colour pigment.

The first aspect of the adhesion promotor addressed was the interaction with the glass substrate. It was found groups that good bonding to the glass could be realized by using 1 or 2 phosphate groups instead of, for example, silane groups.

The second aspect was to control the reaction rate of the adhesion promotor with monomers and oligomers having an acrylate group present in the inkjet ink, in order to influence the shrinkage. This was realized by using at least two thiol groups in the adhesion promotor. Methacrylate groups are known to less rapidly copolymerize with acrylate groups. A single methacrylate group cannot guarantee copolymerization with the acrylate groups of the polymerizable compounds in the inkjet ink. Another way to control the rate with which the adhesion promotor was incorporated in the polymerizing network of the inkjet ink was to include at least 2 thiol groups in the adhesion promotor. These thiol groups participate in a different reaction mechanism known as a thiol-ene reaction. The thiol-ene reaction is a reaction between a thiol and an alkene to form a thioether and occurs in a step growth fashion (propagation and chain-transfer steps) generally proceeding at a lower rate than free radical polymerization involving acrylate monomers and oligomers. For obtaining good adhesion, one thiol group in the adhesion promotor again proved to be insufficient, while 2 or more thiol groups resulted in good adhesion to glass.

A need continues to exist for free radical curable inkjet inks that can be printed in a productive and reliable manner and exhibit good adhesion to glass substrates, while not requiring a primer.

### Summary of invention

In order to overcome the problems described above, preferred embodiments of the present invention have been realized with a free radical curable inkjet ink as claimed and defined here below.

It was surprisingly found that by controlling three aspects of an adhesion promotor that improved adhesion on glass was obtained for free radical curable inkjet inks containing a colour pigment.

The first aspect of the adhesion promotor addressed was the interaction with the glass substrate. It was found groups that good bonding to the glass could be realized by using 1 or 2 phosphate groups instead of, for example, silane groups.

The second aspect was to control the reaction rate of the adhesion promotor with monomers and oligomers having an acrylate group present in the inkjet ink, in order to influence the shrinkage. This was realized by using at least two thiol groups or at least two methacrylate groups in the adhesion promotor. Methacrylate groups are known to less rapidly copolymerize with acrylate groups. A single methacrylate group cannot guarantee copolymerization with the acrylate groups of the polymerizable compounds in the inkjet ink. Another way to control the rate with which the adhesion promotor was incorporated in the polymerizing network of the inkjet ink was to include at least 2 thiol groups in the adhesion promotor. These thiol groups participate in a different reaction mechanism known as a thiol-ene reaction. The thiol-ene reaction is a reaction between a thiol and an alkene to form a thioether and occurs in a step growth fashion (propagation and chain-transfer steps) generally proceeding at a lower rate than free radical polymerization involving acrylate monomers and oligomers. For obtaining good adhesion, one thiol group in the adhesion promotor again proved to be insufficient, while 2 or more thiol groups resulted in good adhesion to glass.

The third aspect was to control the size of the adhesion promotor. Many polymeric adhesion promotors cause an undesired increase in viscosity or cause a deterioration of the ink stability. Controlling the size of the adhesion promotor to less than 5,000 g/mol resulted in a good ink viscosity and ink stability.

Another advantage of the adhesion promotor is the effectiveness, so that it could be used in a small amount as an additive. This gives the ink formulator more freedom in designing a polymerizable composition for tackling other requirements of physical properties, such as stickiness.

These and other objectives will become apparent from the detailed description hereinafter.

### Description of embodiments

### Definitions

The term "radiation curable" means that the inkjet ink is curable by actinic radiation, such as UV radiation and e-beam, preferably UV radiation. The latter inkjet inks are also referred to as UV curable inkjet inks.

The term "monofunctional", as used in monofunctional polymerizable compounds means polymerizable compounds containing a single polymerizable group.

The term "multifunctional", as used in multifunctional polymerizable compounds means polymerizable compounds containing two, three or more polymerizable groups.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc. This applies in a similar manner also to alkenyl, alkynyl, alkaryl and aralkyl groups.

The term "substituted", in e.g. substituted alkyl group means that the alkyl group may be substituted by other atoms than the atoms normally present in such a group, i.e. carbon and hydrogen. For example, a substituted alkyl
group may include a halogen atom or a thiol group. An unsubstituted alkyl group contains only carbon and hydrogen atoms.

Unless otherwise specified a substituted alkyl group is preferably substituted by one or more constituents selected from the group consisting of ester, amide, ether, thioether, ketone, aldehyde, sulfoxide, sulfone, sulfonate ester, sulphonamide, -Cl, -Br, -I, -OH, -SH, -CN and -NO₂.

Unless otherwise specified a substituted or unsubstituted alkyl group is preferably a C₁ to C₆-alkyl group.

### (Meth)acrylate is intended herein to have its standard meaning, i.e. acrylate and/or methacrylate

### Free Radical Curable Inkjet Inks

In a preferred embodiment of the invention, the free radical curable inkjet ink contains a) a colour pigment; b) polymerizable compounds preferably including a monomer and/or oligomer having an acrylate group; and c) an adhesion promotor having a molecular weight of not more than 5,000 g/mol in an amount of 1 to 15 wt% based on the total weight of the free radical curable inkjet ink; wherein the adhesion promotor is a compound having 1 or 2 phosphate groups and further having at least 2 thiol groups.

The adhesion promotor preferably has a molecular weight of not more than 3,000 g/mol, more preferably a molecular weight of not more than 2,000 g/mol. This provides for more formulation latitude in view of the viscosity of the inkjet ink.

The adhesion promotor is included in the ink in an amount of 1 to 15 wt%, preferably 2 to 10 wt% based on the total weight of the free radical curable inkjet ink. At these amounts again more formulation latitude for the free radical curable inkjet ink in view of its viscosity.

In a more preferred embodiment, the adhesion promotor includes 2 or 3 thiol groups and 1 or 2 phosphate groups.

For having a good ejecting ability, the viscosity of the free radical curable inkjet ink at the jetting temperature is preferably smaller than 30.0 mPa.s, more preferably smaller than 20.0 mPa.s, most preferably between 5.0 and 16.0 mPa.s or even between 8.0 and 15.0 mPa.s at a shear rate of 1000 s⁻¹ and a jetting temperature between 30 and 70°C, preferably at a temperature of 35°C to 45°C.

The surface tension of the free radical curable inkjet ink is preferably in the range of 20 mN/m to 35 mN/m at 25°C, more preferably in the range of about 22 mN/m to about 30 mN/m at 25°C. In these ranges, good ink spreading is obtained on a wide range of substrates.

The free radical curable inkjet ink may further also contain at least one polymerization inhibitor for improving the thermal stability of the ink.

The free radical curable inkjet ink may further also contain at least one surfactant for obtaining good spreading characteristics on a substrate.

For printing multi-colour images, the free radical curable inkjet ink is part of a radiation curable inkjet ink set. A preferred radiation curable inkjet ink set for printing different colours contains at least two or three but most preferably at least four radiation curable inkjet inks in accordance with the invention. The inkjet ink set is preferably a free radical curable CMYK or CRYK inkjet ink set, preferably further including a free radical curable white inkjet ink for enhancing colour vibrancy. This inkjet ink set may also be extended with extra inks such as violet, green, red, blue, and/or orange to further enlarge the colour gamut of the image. The radiation curable inkjet ink set may also be extended by the combination of full density inkjet inks with light density inkjet inks. The combination of dark and light colour inks and/or black and grey inks improves the image quality by a lowered graininess.

In a preferred embodiment, the free radical curable inkjet ink contains an organic colour pigment preferably in an amount of 0.1 to 13.0 wt%, more preferably 1.0 to 10.0 wt% and most preferably 2.0 to 8.0 wt based on the total weight of the free radical curable inkjet ink. In the above ranges the colour gamut is maximized.

For light density colour inkjet inks, the organic colour pigment is preferably present in an amount of 0.1 to 1.0 wt%, preferably 0.2 to 0.9 wt%, more preferably 0.3 to 0.5 wt%, based on the total weight of the free radical curable inkjet ink. In the above ranges the graininess in a printed image is minimized.

A particularly preferred free radical curable inkjet ink set includes a black inkjet ink containing carbon black, a cyan inkjet ink containing C.I. Pigment Blue 15:3 or C.I. Pigment Blue 15:4, a magenta or red inkjet ink containing a quinacridone or a mixed crystal thereof or a diketopyrrolopyrrole pigment or a mixed crystal thereof; and a yellow inkjet ink containing a yellow pigment selected from the group consisting of C.I. Pigment Yellow 83, C.I. Pigment Yellow 97, C.I. Pigment Yellow 110, C.I. Pigment Yellow 120, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213 and C.I. Pigment Yellow 214. The use of these pigments in the inkjet inks provide for good light fastness, as when printed on glass the colour image may be exposed to continuous exposure of sun light.

There is no limitation in combining any of the above preferred embodiments with each other.

### Adhesion promotors

The adhesion promotor has a molecular weight of not more than 5,000 g/mol in an amount of 1 to 15 wt% based on the total weight of the free radical curable inkjet ink; wherein the adhesion promotor is a compound having 1 or 2 phosphate groups and further at least 2, preferably 2 to 4 thiol groups.

In a preferred embodiment, the adhesion promotor includes 2 or 3 thiol groups and 1 or 2 phosphate groups.

Thiol groups can participate in a reaction known as a thiol-ene reaction, which is a reaction between a thiol and an ethylenically unsaturated double bond, such as an acrylate group.

In the present invention, it is believed that having the phosphate group of the adhesion promotor attached to a glass substrate, the reaction of the thiol group is delayed to a later stage after a large part of the acrylates has already polymerized. This results in an improved adhesion by reduction of shrinkage effects.

Preferred adhesion promotors for the free radical curable inkjet ink of the invention are compounds according to Formula I: 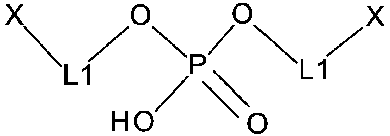 or Formula II: 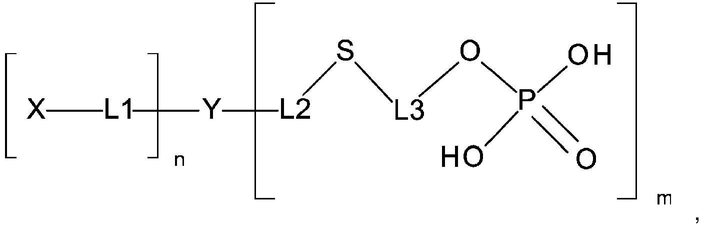
wherein n is 2 or 3; m is 1 or 2; z is the sum of n and m and z is 3 or 4;
Y represents a z-valent core having 1 to 12 atoms; X represents a thiol group; and L1, L2 and L3 each independently represent a straight-chain or branched C₂-C₁₂-alkanediyl group optionally interrupted by one or two oxygen atoms and/or by one carboxyl group.

The linking groups L1 to L3 are preferably each independently selected from the group consisting of -CH₂-CH₂-, -CH₂-CH₂-O-CH₂-CH₂-, -CH₂-CH₂-O-CH₂-CH₂-O-CH₂-CH₂-, -CH₂-CH₂-(C=O)-O-CH₂-, -CH₂-CH₂-(C=O)-O-CH₂-CH₂-, -CH(CH₃)-CH₂-(C=O)-O-CH₂-, -CH(CH₃)-CH₂-(C=O)-O-CH₂-CH₂-.

CH₂-CH(CH₃)-(C=O)-O-CH₂-CH₂-, CH₂-CH(CH₃)-(C=O)-O-CH₂-CH₂-O-CH₂-CH₂-, CH₂-CH(CH₃)-(C=O)-O-CH₂-CH₂-O-CH₂-CH₂-O-CH₂-CH₂- and CH₂-CH(CH₃)-(C=O)-O-CH₂-CH₂-O-CH₂-CH₂-O-CH₂-CH₂-O-CH₂-CH₂-.

The z-valent core Y is of no particular chemical importance. It preferably has a small size of no more than 500 g/mol or even less than 300 g/mol. Furthermore, it preferably contains no other atoms than C, N, O or H. In a preferred embodiment, the z-valent core Y represents a carbon atom or an isocyanurate group.

Particularly preferred adhesion promotors are selected from the group consisting of: ; 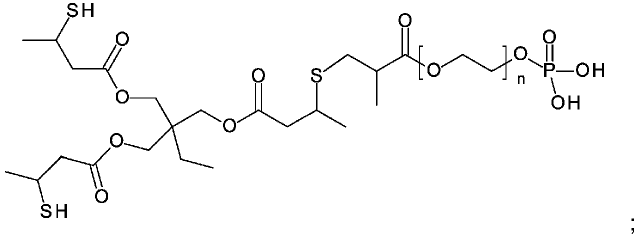 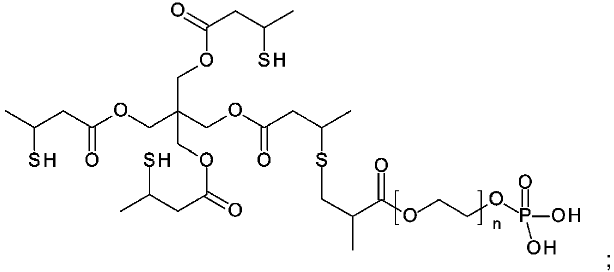 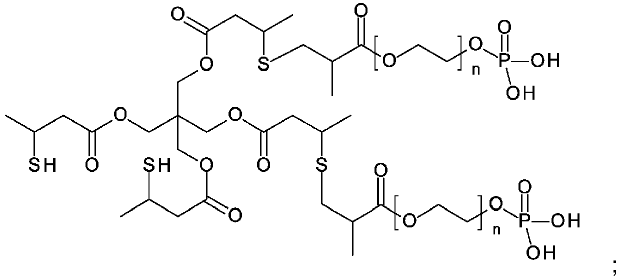 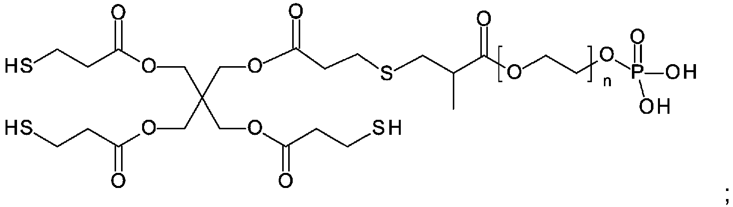 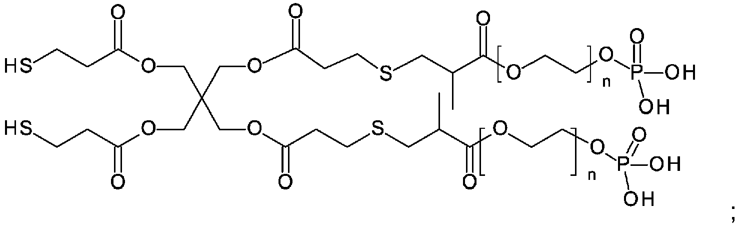 and 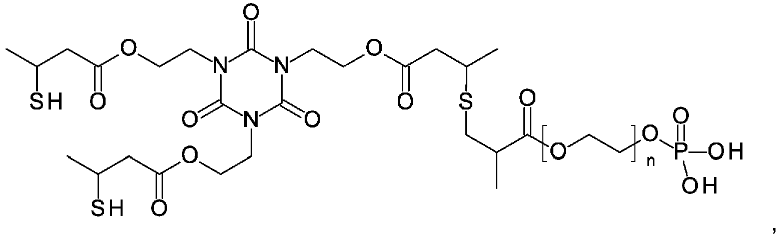 wherein for each adhesion promotor the value of the integer n is 1 to 15, but preferably 1, 2 or 3.

The above adhesion promotors are preferably synthesized using a multifunctional thiol and a polymerizable compound containing a phosphate group, such as e.g. Sipomer^{™} PAM100 from SOLVAY. Preferred multifunctional thiols contain 3 or 4 thiol groups. The multifunctional thiol is mixed with the polymerizable compound having a phosphate group in a molar ratio such that a preferred adhesion promotor is obtained having 1 or 2 phosphate groups and 2 to 4 thiol groups. The reaction occurs at an elevated temperature, preferably between 70°C or 90°C in the presence of a catalyst. A preferred catalyst is 2,2'-Azodi(2-methylbutyronitrile) (AMBN) due to its good solubility in the multifunctional thiol mixtures.

The multifunctional thiols are preferably selected from the group consisting of: 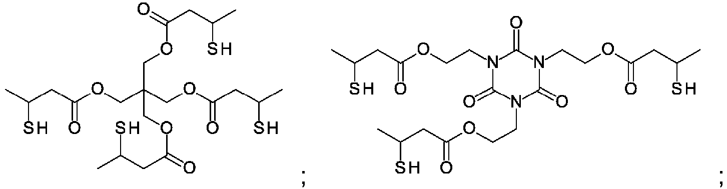 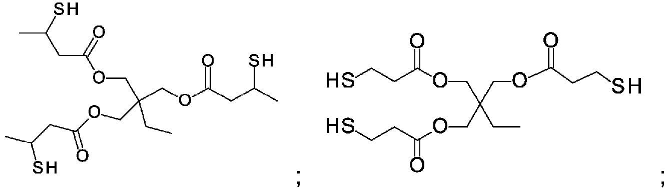 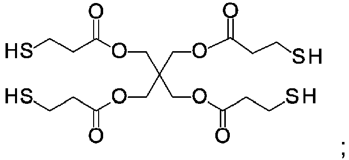 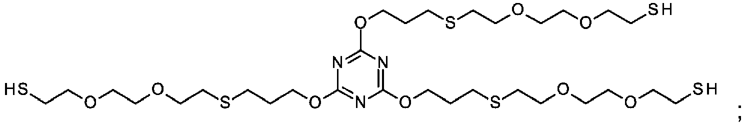 and

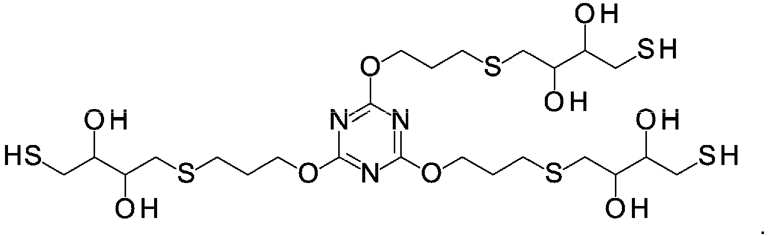

Multifunctional thiols can be synthesized via a thiol-ene reaction, using an excess of thiol, as also described in US 8513339 B (DESOTO INT). Examples of such multifunctional thiols as reaction product are illustrated by the two last compounds in the previous paragraph. A thiol can also be introduced on a molecule through reaction of an amine with a cyclic thiolactone, through reaction of an amine with 2-iminothiolane (Traut's reagent), through nucleophilic ring-opening of an ethylene sulfide, through reaction of a cyclic dithiocarbonate with an amine, etc.

Multifunctional thiols having secondary thiol groups are particularly preferred for reasons of better stability against oxidation.

The synthesis preferably proceeds via a radical pathway, in which the radical is formed under a thermal or a light (UV) stimulus. This process can proceed in the absence of a catalyst, or in the presence of a catalyst being a radical generating species. Any radical initiator can be used in the present invention, but depending on the stimulus (thermal or light), a different catalyst can be used. The preferred catalyst is a radical initiator for thermal initiation.

Suitable catalysts for thermal initiation include AIBN, 2,2'-azobis(2-methylbutyronitrile), 1,1'-Azobis(cyclohexanecarbonitrile), tert-amyl peroxybenzoate, 4,4'-Azobis(4-cyanovaleric acid), benzoyl peroxide, 2,2-bis(tert-butylperoxy)butane, 1,1-bis(tert-butylperoxy)cyclohexane, 2,5-bis(tert-butylperoxy)-2,5-dimethylhexane, 2,5-bis(tert-butylperoxy)-2,5-dimethylhexane, 2,5-bis(tert-butylperoxy)-2,5-dimethyl-3-hexyne, Bis(1-(tert-butylperoxy)-1-methylethyl)benzene, 1,1-bis(tert-butylperoxy)-3,3,5-trimethylcyclohexane, tert-butyl hydroperoxide, tert-butyl peracetate, tert-butyl peroxide, tert-butyl peroxybenzoate, tert-butylperoxy isopropyl carbonate, cumene hydroperoxide, cyclohexanone peroxide, dicumyl peroxide, lauroyl peroxide, 2,4-pentanedione peroxide, peracetic acid, and potassium persulfate.

Suitable catalysts for photoinitiation include Norrish Type I and Type II photoinitiators. Type I photoinitiators such as hydroxyacetophenones, alkylaminoacetophenones, benzyl ketals and dialkoxyacetophenones, benzoin ethers, phosphine oxides, BCIM and HABIs, etc. Type II photoinitiators such as optionally substituted benzophenones, thioxanthones, anthraquinones, benzoylformate esters, camphorquinone. Blends of photoinitiators can also be used, as well as polymeric photoinitiators.

The reaction can also proceed via a nucleophilic pathway, in which a base or nucleophile is used as catalyst.

The synthesis is illustrated in the examples here below.

### Monomers and oligomers

Any monomer and oligomer capable of free radical polymerization may be used as polymerizable compound, however at least a part of the polymerizable compounds have one or more acrylate groups.

The polymerizable compounds preferably include monomers and/or oligomers having an acrylate group. The viscosity of the free radical curable inkjet ink can be adjusted by varying the ratio between the monomers and oligomers. The polymerizable compounds may be any monomer and/or oligomer found in the Polymer Handbook Vol 1 + 2, 4th edition, edited by J. BRANDRUP et al., Wiley-Interscience, 1999 .

The monomer and oligomer may have an ethylenically unsaturated polymerizable group selected from the group consisting of an acrylate, a methacrylate, an acrylamide, a methacrylamide, a styrene group, a maleate, a fumarate, an itaconate, a vinyl ether, a vinyl ester, an allyl ether and an allyl ester. Most preferably, the monomer and oligomer has one or more acrylate groups as ethylenically unsaturated polymerizable group, as acrylate groups provide for high curing speed, thus improving the productivity of the inkjet printing process.

The monomers and oligomers preferably contain a single acrylate group. These monofunctional monomers generally exhibit less shrinkage than multifunctional monomers and oligomers, which is advantageous for improving adhesion.

Preferred monoacrylates include isoamyl acrylate, isodecyl acrylate, stearyl acrylate, lauryl acrylate, octyl acrylate, decyl acrylate, isoamylstyl acrylate, isostearyl acrylate, 2-ethylhexyl-diglycol acrylate, 2-hydroxybutyl acrylate, 2-acryloyloxyethylhexahydrophthalic acid, butoxyethyl acrylate, ethoxydiethylene glycol acrylate, methoxydiethylene glycol acrylate, methoxypolyethylene glycol acrylate, methoxypropylene glycol acrylate, phenoxyethyl acrylate, tetrahydrofurfuryl acrylate, isobornyl acrylate, 2-hydroxyethyl acrylate, 2-hydroxypropyl acrylate, 2-hydroxy-3-phenoxypropyl acrylate, 2-acryloyloxyethylsuccinic acid, 2-acryloyxyethylphthalic acid, 2-acryloxyethyl-2-hydroxyethyl-phthalic acid, lactone modified flexible acrylate, t-butylcyclohexyl acrylate, caprolactone acrylate, cyclic trimethylolpropane formal acrylate, ethoxyethoxyethyl acrylate, ethoxylated nonyl phenol acrylate, isooctyl acrylate, octyldecyl acrylate, alkoxylated phenol acrylate, and tridecyl acrylate.

Another preferred monoacrylate monomer is a polymerizable compound according to Formula (MA): 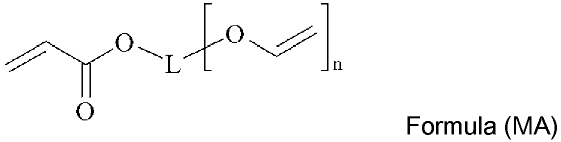 wherein,
L represents a linking group comprising two to ten carbon atoms; and
n and m independently represent a value from 1 to 3. Most preferably m represents a value of 1. A particularly preferred monoacrylate monomer of Formula (MA) is 2-(2'-vinyloxyethoxy) ethyl acrylate as it provides very low viscosity to free radical curable inkjet ink.

In addition to an acrylate monomer, also the corresponding methacrylate monomers and oligomers of the above monoacrylate monomers may be used.

For improving physical properties also a N-vinyllactam may be used in ink and/or primer. The N-vinyllactam is preferably a compound represented by the following structural formula: 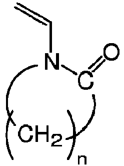 wherein n denotes an integer of 2 to 6; n is preferably an integer of 3 to 5 from the viewpoint of flexibility after the ink composition is cured, adhesion to a substrate, and ready availability of starting materials, n is more preferably 3 or 5, and n is particularly preferably 5, which is N-vinylcaprolactam. N-vinylcaprolactam is preferred as it is available at a relatively low price, and gives particularly good ink curability, thus improving productivity. It is also known to improve adhesion on a number of substrates.

Another preferred polymerizable compound is vinyl methyl oxazolidinone (VMOX) from BASF as it has high reactivity in the copolymerization with acrylates and exhibits low odour and good adhesion on a wide range of substrates.

The use of multifunctional monomers and/or oligomers in the free radical curable inkjet ink can be beneficial for improving scratch resistance or outdoor resistance.

In a preferred embodiment, the multifunctional monomer or oligomer is a multifunctional acrylate having two or three polymerizable acrylate groups.

In a particularly preferred embodiment, the multifunctional monomer or oligomer is substantially or exclusively a duofunctional acrylate, i.e. containing two acrylate groups. It was observed that polymerizable compounds having more than two acrylate groups tend to have a larger negative impact on the adhesion

Suitable multifunctional acrylates include triethylene glycol diacrylate, tetraethylene glycol diacrylate, polyethylene glycol diacrylate, dipropylene glycol diacrylate, tripropylene glycol diacrylate, polypropylene glycol diacrylate, 1,4-butanediol diacrylate, 1,6-hexanediol diacrylate, 1,9-nonanediol diacrylate, neopentyl glycol diacrylate, dimethyloltricyclodecane diacrylate, bisphenol A EO (ethylene oxide) adduct diacrylate, bisphenol A PO (propylene oxide) adduct diacrylate, hydroxypivalate neopentyl glycol diacrylate, propoxylated neopentyl glycol diacrylate, alkoxylated dimethyloltricyclodecane diacrylate and polytetramethylene glycol diacrylate, trimethylolpropane triacrylate, EO modified trimethylolpropane triacrylate, tri (propylene glycol) triacrylate, caprolactone modified trimethylolpropane triacrylate, pentaerythritol triacrylate, pentaerythritol tetraacrylate, pentaerythritolethoxy tetraacrylate, dipentaerythritol hexaacrylate, ditrimethylolpropane tetraacrylate, glycerolpropoxy triacrylate, and caprolactam modified dipentaerythritol hexaacrylate

Other suitable difunctional acrylates include alkoxylated cyclohexanone dimethanol diacrylate, alkoxylated hexanediol diacrylate, dioxane glycol diacrylate, dioxane glycol diacrylate, cyclohexanone dimethanol diacrylate, diethylene glycol diacrylate and neopentyl glycol diacrylate.

Higher functional acrylates include propoxylated glycerine triacrylate and propoxylated trimethylolpropane triacrylate, di-trimethylolpropane tetraacrylate, dipentaerythritol pentaacrylate, ethoxylated pentaerythritol tetraacrylate, methoxylated glycol acrylates and acrylate esters

Preferred multifunctional acrylates include dipropylene glycol diacrylate, tripropylene glycol diacrylate, 1,6-hexanediol diacrylate, cyclohexanone dimethanol diacrylate, polyethyleneglycol 200 diacrylate, 3-methyl 1,5-pentanediol diacrylate, pentaerythritol tetraacrylate, trimethylolpropane triacrylate and dipentaerythritol pentaacrylate.

For maximizing the improvement in adhesion, the free radical curable inkjet ink preferably includes more than 30 wt%, more preferably more than 50 wt% of the polymerizable compounds as a monofunctional acrylate monomer and/or monofunctional acrylate oligomer with the wt% based on the total weight of the polymerizable composition.

### Photoinitiators and Co-initiators

The free radical curable inkjet ink is preferably a UV curable inkjet ink containing one or more free radical photoinitiators. A free radical photoinitiator is a chemical compound that initiates polymerization of monomers and oligomers when exposed to actinic radiation by the formation of a free radical. Two types of radical photoinitiators can be distinguished. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or co-initiator. Both type I and type II photoinitiators can be used in the present invention, alone or in combination.

In order to increase the productivity further, the free radical curable inkjet ink may additionally contain one or more co-initiators. Suitable examples of co-initiators can be categorized into three groups:
(1) tertiary aliphatic amines such as methyldiethanolamine, dimethylethanolamine, triethanolamine, triethylamine and N-methylmorpholine;
(2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and
(3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

The preferred co-initiators are aminobenzoates.

Suitable photo-initiators are disclosed in CRIVELLO, J.V., et al. VOLUME III: Photoinitiators for Free Radical Cationic . 2nd edition. Edited by BRADLEY, G.. London,UK: John Wiley and Sons Ltd, 1998. p.287-294.

Specific examples of photo-initiators for the free radical inkjet ink may include, but are not limited to, the following compounds or combinations thereof: benzophenone and substituted benzophenones, 1-hydroxycyclohexyl phenyl ketone, thioxanthones such as isopropylthioxanthone, 2-hydroxy-2-methyl-1-phenylpropan-1-one, 2-benzyl-2-dimethylamino- (4-morpholinophenyl) butan-1-one, benzil dimethylketal, bis (2,6- dimethylbenzoyl) -2,4, 4-trimethylpentylphosphine oxide, 2,4,6 trimethylbenzoyldiphenylphosphine oxide, 2-methyl-1- [4-(methylthio) phenyl] -2-morpholinopropan-1-one, 2,2-dimethoxy-1, 2-diphenylethan-1-one or 5,7-diiodo-3- butoxy-6-fluorone.

Suitable commercial photo-initiators include Irgacure^{™} 184, Irgacure^{™} 500, Irgacure^{™} 907, Irgacure^{™} 369, Irgacure^{™} 1700, Irgacure^{™} 651, Irgacure^{™} 819, Irgacure^{™} 1000, Irgacure^{™} 1300, Irgacure^{™} 1870, Darocur^{™} 1173, Darocur^{™} 2959, Darocur^{™} 4265 and Darocur^{™} ITX, Lucerin^{™} TPO, all available from BASF, Esacure^{™} KT046, Esacure^{™} KIP150, Esacure^{™} KT37 and Esacure^{™} EDB available from LAMBERTI, H-Nu^{™} 470 and H-Nu^{™} 470X available from SPECTRA GROUP Ltd..

The free radical curable inkjet ink preferably contains a photoinitiator including a photoinitiating moiety selected from the group consisting of acyl phosphine oxide moiety, α-hydroxyketone moiety, thioxanthone moiety and a carbazole moiety. These photoinitiators provide improved reliability and productivity as they allow for curing by UV LEDs having a longer life-time with unreduced light emission compared to UV bulb mercury lamps traditionally used in UV inkjet printers.

In a preferred embodiment, the photoinitiator in the free radical curable inkjet ink includes one or more acylphosphine oxides. Preferred acylphosphine oxide photoinitiators include 2,4,6-trimethylbenzoyl-diphenyl-phosphine oxide, ethyl (2,4,6-trimethylbenzoyl) phenyl phosphinate; and bis(2,4,6-trimethylbenzoyl)-phenyl phosphine oxide.

In a preferred embodiment, a UV curable white inkjet ink includes no thioxanthone type photoinitiator. UV curable white inkjet inks including thioxanthone type photoinitiators generally exhibit undesired photoyellowing.

The photoinitiator may be polymerizable photoinitiator, including one or more polymerizable groups, preferably acrylate groups.

The co-initiator may be polymerizable co-initiator, including one or more polymerizable groups, preferably acrylate groups

A preferred amount of photoinitiator is 0 to 30 wt%, more preferably 0.5 to 20 wt%, and most preferably 1.0 to 10 wt% of the total weight of the free radical curable inkjet ink.

The free radical curable inkjet ink preferably comprises the co-initiator in an amount of 0.1 to 30 wt%, more preferably in an amount of 0.5 to 25 wt%, most preferably in an amount of 1 to 10 wt% of the total weight of the free radical curable inkjet ink.

### Colour Pigments

The free radical curable inkjet ink contains a colour pigment as colorant. Preferably only colour pigments are used as colorants, because of their superior light fading properties compared to dyes.

The colour pigments may be inorganic or organic, but for colours other than white or black they are preferably organic colour pigments. The latter provide for a higher colour gamut than inorganic pigments.

Preferred colour pigments are chosen from those disclosed by HERBST, Willy, et al. Industrial Organic Pigments, Production, Properties, Applications. 3rd edition. Wiley - VCH , 2004. ISBN 3527305769.

Preferred yellow pigments enabling a high colour gamut are C.I. Pigment Yellow 1, 3, 10, 12, 13, 14, 17, 55, 65, 73, 74, 75, 83, 93, 97, 109, 110, 111, 120, 128, 138, 139, 150, 151, 154, 155, 175, 180, 181, 185, 194, 213 and 214.

For obtaining high colour gamut and light stability, most preferably pigments for a free radical curable yellow inkjet ink of the invention are selected from the group consisting of C.I. Pigment Yellow 83, C.I. Pigment Yellow 97, C.I. Pigment Yellow 110, C.I. Pigment Yellow 120, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213 and C.I. Pigment Yellow 214.

Preferred red and magenta pigments are C.I. Pigment Red 17, 22, 23, 41, 48:1, 48:2, 49:1, 49:2, 52:1, 57:1, 88, 112, 122, 144, 146, 149, 170, 175, 176, 184, 185, 188, 202, 206, 207, 210, 216, 221, 248, 251, 254, 255, 264, 266, 270 and 272.

For obtaining high colour gamut and light stability, a free radical curable magenta or red inkjet ink of the invention preferably contains a quinacridone or a mixed crystal thereof or a diketopyrrolopyrrole pigment or a mixed crystal thereof.

Preferred violet pigments are C.I. Pigment Violet 19, 23, 32, and 37.

Preferred orange pigments are C.I. Pigment Orange 5, 13, 16, 34, 40, 43, 59, 66, 67, 69, 71 and 73.

Preferred green pigments are C.I. Pigment Green 7 and 36.

Preferred brown pigments are C.I. Pigment Brown 6 and 7.

Suitable pigments include mixed crystals of the above preferred pigments. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia Magenta RT-355-D from BASF AG.

A free radical curable cyan inkjet ink of the invention preferably contains a beta-copper phthalocyanine pigment, such as C.I. Pigment Blue 15:3 and particularly preferably C.I. Pigment Blue 15:4 for reasons of good dispersion stability. It was found that these beta-copper phthalocyanine pigment exhibited the best light fastness compared to other cyan pigments.

The free radical curable black inkjet ink preferably contains a carbon black pigment for achieving good blackness at low cost. Suitable carbon blacks include Carbon Black MA8^{®} from MITSUBISHI CHEMICAL, Regal^{®} 400R, Mogul^{®} L, Elftex^{®} 320 from CABOT Co., or Carbon Black FW18, Special Black 250, Special Black 350, Special Black 550, Printex^{®} 25, Printex^{®} 35, Printex^{®} 55, Printex^{®} 90, Printex^{®} 150T from DEGUSSA. In a preferred embodiment, the carbon carbon black pigment used is a pigment having less than 0.15% of toluene-extractable fraction using the method as described in section III, paragraph 5 of the Resolution AP(89) 1 dated 13 September 1989 published by the Council of Europe.

Also inorganic pigments may be present in the inkjet inks. Suitable pigments are C.I. Pigment Metal 1, 2 and 3. Illustrative examples of the inorganic pigments include titanium oxide, barium sulfate, calcium carbonate, zinc oxide, lead sulfate, yellow lead, zinc yellow, red iron oxide (III), cadmium red, ultramarine blue, prussian blue, chromium oxide green, cobalt green, amber, titanium black and synthetic iron black. However, care should be taken to prevent migration of heavy metals from inkjet printed materials. Preferably no pigments are used which contain a heavy metal selected from the group consisting of arsenic, lead, mercury and cadmium.

Pigment particles in inkjet ink should be sufficiently small to permit free flow of the ink through the inkjet-printing device, especially at the ejecting nozzles. It is also desirable to use small particles for maximum colour strength and to slow down sedimentation, which is important for good reliability and productivity of the inkjet printing process

The numeric average pigment particle size is preferably between 0.050 and 1 µm, more preferably between 0.070 and 0.300 µm and particularly preferably between 0.080 and 0.200 µm. Most preferably, the numeric average pigment particle size is no larger than 0.150 µm. An average particle size smaller than 0.050 µm is less desirable for decreased lightfastness.

However, for a free radical curable white inkjet ink, the numeric average particle diameter of the white pigment is preferably from 150 to 400 nm, and most preferably from 180 to 350 nm. Sufficient hiding power is generally not obtained when the average diameter is less than 150 nm, and the storage ability and the jet-out suitability of the ink tends to be degraded when the average diameter exceeds 400 nm.

The determination of the numeric average particle diameter is best performed by photon correlation spectroscopy at a wavelength of 633 nm with a 4mW HeNe laser on a diluted sample of the pigmented inkjet ink. A suitable particle size analyzer is a Malvern^{™} nano-S available from Goffin-Meyvis. A sample can, for example, be prepared by addition of one drop of ink to a cuvette containing 1.5 mL ethyl acetate and mixed until a homogenous sample was obtained. The measured particle size is preferably the average value of 3 consecutive measurements consisting of 6 runs of 20 seconds.

In the case of a white inkjet ink, preferably a pigment with a refractive index greater than 1.60, preferably greater than 2.00, more preferably greater than 2.50 and most preferably greater than 2.60 is used. The white pigments may be employed singly or in combination.

Preferably titanium dioxide is used for the pigment with a refractive index greater than 1.60. Titanium oxide occurs in the crystalline forms of anatase type, rutile type and brookite type. The anatase type has a relatively low density and is easily ground into fine particles, while the rutile type has a relatively high refractive index, exhibiting a high covering power. Either one of these is usable in this invention. It is preferred to make the most possible use of characteristics and to make selections according to the use thereof. The use of the anatase type having a low density and a small particle size can achieve superior dispersion stability, ink storage stability and ejectability. At least two different crystalline forms may be used in combination. The combined use of the anatase type and the rutile type which exhibits a high colouring power can reduce the total amount of titanium oxide, leading to improved storage stability and ejection performance of ink.

For surface treatment of the titanium oxide, an aqueous treatment or a gas phase treatment is applied, and an alumina-silica treating agent is usually employed. Untreated-, alumina treated- or alumina-silica treated-titanium oxide are employable, but preferably a titanium oxide is used that was treated with a surface-treating agent comprising at least one inorganic surface treating agent selected from the group consisting of aluminum compound including aluminum hydroxide and alumina, silica, and zirconia; and optionally an organic surface-treating agent.

In a free radical curable white inkjet ink, the white pigment is preferably used in an amount of amount of 10 to 30 wt%, more preferably of 15 to 25 wt% based on the total weight of the free radical curable white inkjet ink.

For a coloured inkjet ink other than white, the colour pigment is preferably present in an amount of 0.1 to 10 wt%, preferably 1 to 6 wt% based on the total weight of the inkjet ink.

### Dispersants

The free radical curable inkjet ink preferably contains a dispersant, more preferably a polymeric dispersant.

Examples of the dispersant include, but are not particularly limited to polymeric dispersants that are copolymers of two, three, four, five or even more monomers. The properties of polymeric dispersants depend on both the nature of the monomers and their distribution in the polymer. Copolymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The polymeric dispersant has preferably a dispersity smaller than 2, more preferably smaller than 1.75 and most preferably smaller than 1.5.

Commercial examples of polymeric dispersants are the following:
- DISPERBYK^{™} dispersants available from BYK CHEMIE GMBH;
- SOLSPERSE^{™} dispersants available from LUBRIZOL;
- TEGO^{™} DISPERS^{™} dispersants from EVONIK;
- EDAPLAN^{™} dispersants from MÜNZING CHEMIE;
- ETHACRYL^{™} dispersants from LYONDELL;
- GANEX^{™} dispersants from ISP;
- DISPEX^{™} and EFKA^{™} dispersants from BASF;
- DISPONER^{™} dispersants from DEUCHEM.

Particularly preferred polymeric dispersants include Solsperse^{™} dispersants from LUBRIZOL, Efka^{™} dispersants from BASF, Disperbyk^{™} dispersants from BYK CHEMIE GMBH, and Ajisper^{™} dispersants from AJINOMOTO FINE-TECHNO Co. Particularly preferred dispersants are Solsperse^{™}32000, 35000 and 39000 dispersants from LUBRIZOL.

The dispersants may be used alone or in combination of two or more kinds thereof.

The polymeric dispersant is preferably used in an amount of 2 to 600 wt%, more preferably 5 to 200 wt%, most preferably 50 to 90 wt% based on the weight of the pigment.

### Dispersion Synergists

For further improving dispersion stability of the inkjet ink a dispersion synergist may be added to the ink. A dispersion synergist usually consists of an anionic part and a cationic part. The anionic part of the dispersion synergist usually exhibiting a certain molecular similarity with the colour pigment and the cationic part of the dispersion synergist consists of one or more protons and/or cations to compensate the charge of the anionic part of the dispersion synergist.

The dispersion synergist is preferably added in a smaller amount than the polymeric dispersant(s). The ratio of polymeric dispersant/dispersion synergist depends upon the pigment and should be determined experimentally. Typically, the ratio wt% polymeric dispersant versus wt% dispersion synergist is selected between 2:1 to 100:1, preferably between 2:1 and 20:1.

Suitable dispersion synergists that are commercially available include Solsperse^{™}5000 and Solsperse^{™}22000 from LUBRIZOL.

Particular preferred pigments for the magenta ink used are a diketopyrrolopyrrole pigment or a quinacridone pigment. Suitable dispersion synergists include those disclosed in EP 1790698 A (AGFA GRAPHICS), EP 1790696 A (AGFA GRAPHICS), WO 2007/060255 (AGFA GRAPHICS) and EP 1790695 A (AGFA GRAPHICS).

In dispersing C.I. Pigment Blue 15:3, the use of a sulfonated Cu-phthalocyanine dispersion synergist, e.g. Solsperse^{™} 5000 from LUBRIZOL is preferred. Suitable dispersion synergists for yellow inkjet inks include those disclosed in EP 1790697 A (AGFA GRAPHICS).

### Stabilizers

The free radical curable inkjet ink may also contain a stabilizer, such as a polymerization inhibitor. Due to the fact that an ink contains the polymerization inhibitor, a polymerization reaction before curing can be prevented.

Suitable polymerization inhibitors include phenol type antioxidants, hindered amine light stabilizers, phosphor type antioxidants, benzoquinone, hydroquinone and derivatives, such as hydroquinone monomethyl ether commonly used in (meth)acrylate monomers.

Examples of the phenolic polymerization inhibitor include, but are not limited to the following substances, p-methoxy phenol, cresol, t-butyl catechol, di-t-butyl-p-cresol, hydroquinone monomethylether, α-naphthol, 3,5-di-t-butyl-4-hydroxytoluene, 2,6-di-t-butyl-4-methylphenol, 2,2'-methylene-bis(4-methyl-6-t-butylphenol), 2,2'-methylene-bis(4-ethyl-6-butylphenol), and 4,4'-thio-bis(3-methyl-6-t-butylphenol) and pyrogallol.

Suitable commercial inhibitors are, for example, Sumilizer^{™} GA-80, Sumilizer^{™} GM and Sumilizer^{™} GS produced by Sumitomo Chemical Co. Ltd.; Genorad^{™} 16, Genorad^{™} 18 and Genorad^{™} 20 from Rahn AG; Irgastab^{™} UV10 and Irgastab^{™} UV22, Tinuvin^{™} 460 and CGS20 from Ciba Specialty Chemicals; Floorstab^{™} UV range (UV-1, UV-2, UV-5 and UV-8) from Kromachem Ltd, Additol^{™} S range (S100, S110, S120 and S130) from Cytec Surface Specialties.

A preferred polymerization inhibitor is Irgastab^{™} UV10 from BASF. Other examples of polymerization inhibitors include TEMPO, TEMPOL, and Al cupferron.

The polymerization inhibitors may be used alone or in combination of two or more kinds thereof.

In a preferred embodiment, the polymerization inhibitor is a mixture of different types of polymerization inhibitors. Preferred polymerization inhibitors are mixtures of an oxyl free radical-based polymerization inhibitor, a phenol-based polymerization inhibitor, and an amine-based polymerization inhibitor. Suitable examples are given in EP 2851402 A (FUJIFILM).

The polymerization inhibitor is preferably added at 200 to 20,000 ppm relative to the total amount of the inkjet ink.

### Surfactants

The free radical curable inkjet ink may contain at least one surfactant. The surfactant can be anionic, cationic, non-ionic, or zwitter-ionic and is preferably added in a total dry weight quantity less than 3 wt% based on the total weight of the ink and particularly in a total less than 1.5 wt% based on the total weight of the free radical curable inkjet ink to prevent foaming of the ink in its container. The content of the surfactant is preferably 0.05 to 1.5 wt%, more preferably 0.10 to 1.0 wt% based on the total weight of the free radical curable inkjet ink.

Preferred surfactants are selected from fluoro surfactants (such as fluorinated hydrocarbons) and silicone surfactants. The silicone surfactants are preferably siloxanes and can be alkoxylated, polyester modified, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK^{™} 333 and BYK^{™} UV3510 from BYK Chemie.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

Preferred commercially available (meth)acrylated silicone surfactants include: Ebecryl^{™} 350 , a silicone diacrylate from Cytec; the polyether modified acrylated polydimethylsiloxane BYK^{™} UV3500 and BYK^{™} UV3530, the polyester modified acrylated polydimethylsiloxane BYK^{™} UV3570, all manufactured by BYK Chemie; Tego^{™} Rad 2100, Tego^{™} Rad 2200N, Tego^{™} Rad 2250N, Tego^{™} Rad 2300, Tego^{™} Rad 2500, Tego^{™} Rad 2600, and Tego^{™} Rad 2700, Tego^{™} RC711 from EVONIK; Silaplane^{™} FM7711, Silaplane^{™} FM7721, Silaplane^{™} FM7731, Silaplane^{™} FM0711, Silaplane^{™} FM0721, Silaplane^{™} FM0725, Silaplane^{™} TM0701, Silaplane^{™} TM0701T all manufactured by CHISSO Corporation; and DMS-R05, DMS-R11, DMS-R18, DMS-R22, DMS-R31, DMS-U21, DBE-U22, SIB1400, RMS-044, RMS-033, RMS-083, UMS-182, UMS-992, UCS-052, RTT-1011 and UTT-1012 all manufactured by GELEST Inc..

### Preparation of Free Radical Curable Inkjet Inks

A preferred method of manufacturing a free radical curable inkjet ink of the invention includes the steps of: a) preparing a pigment dispersion by dispersing a colour pigment in one or more polymerizable compounds including monomers and/or oligomers having an acrylate group; and b) adding an adhesion promotor to the pigment dispersion.

The preparation of pigmented radiation curable inkjet inks is well-known to the skilled person. Pigment dispersions may be prepared by precipitating or milling the pigment in the dispersion medium in the presence of the dispersant.

Mixing apparatuses may include a pressure kneader, an open kneader, a planetary mixer, a dissolver, and a Dalton Universal Mixer. Suitable milling and dispersion apparatuses are a ball mill, a pearl mill, a colloid mill, a high-speed disperser, double rollers, a bead mill, a paint conditioner, and triple rollers. The dispersions may also be prepared using ultrasonic energy.

Many different types of materials may be used as milling media, such as glasses, ceramics, metals, and plastics. In a preferred embodiment, the grinding media can comprise particles, preferably substantially spherical in shape, e.g. beads consisting essentially of a polymeric resin or yttrium stabilized zirconium beads.

In the process of mixing, milling and dispersion, each process is preferably performed with cooling to prevent build-up of heat, and as much as possible under light conditions in which actinic radiation has been substantially excluded.

The pigment dispersion may contain more than one pigment. Such a pigment dispersion may be prepared using separate dispersions for each pigment, or alternatively several pigments may be mixed and co-milled in preparing the dispersion.

The dispersion process can be carried out in a continuous, batch or semi-batch mode.

The preferred amounts and ratios of the ingredients of the mill grind will vary widely depending upon the specific materials and the intended applications. The contents of the milling mixture comprise the mill grind and the milling media. The mill grind comprises pigment, polymeric dispersant and a liquid carrier.

The milling time can vary widely and depends upon the pigment, the selected mechanical means and residence conditions, the initial and desired final particle size, etc. In the present invention pigment dispersions with an average particle size of less than 100 nm may be prepared.

After milling is completed, the milling media is separated from the milled particulate product (in either a dry or liquid dispersion form) using conventional separation techniques, such as by filtration, sieving through a mesh screen, and the like. Often the sieve is built into the mill, e.g. for a bead mill. The milled pigment concentrate is preferably separated from the milling media by filtration.

In general, it is desirable to make inkjet inks in the form of a concentrated mill grind, which is subsequently diluted to the appropriate concentration for use in the inkjet printing system. This technique permits preparation of a greater quantity of pigmented ink from the equipment. By dilution, the inkjet ink is adjusted to the desired viscosity, surface tension, colour, hue, saturation density, and print area coverage for the particular application.

### Substrates

Although the free radical inkjet inks can be especially advantageously used on glass substrates, there is no real limitation on the type of substrate. The substrates may have ceramic, metallic or polymeric surfaces for printing upon.

Any substrate having a glass surface, is suitable as glass substrate. The glass substrate may be a glass sheet, such as float glass, or it maybe a substrate having only partly a glass surface, such as a mirror.

Other substantially non-absorbing substrates include substrates are those including surfaces of polyethylene, polypropylene, polycarbonate, polyvinyl chloride, polyesters like polyethylene terephthalate (PET), polyethylene naphthalate (PEN) and polylactide (PLA) and polyimide.

However, the substrate may also be porous, such as textile, paper and card board substrates.

The paper substrate can be plain paper or resin coated paper, e.g. polyethylene or polypropylene coated paper. There is no real limitation on the type of paper and it includes newsprint paper, magazine paper, office paper, wallpaper but also paper of higher grammage, usually referred to as boards, such as white lined chipboard, corrugated board and packaging board.

The substrates may be transparent, translucent or opaque. Preferred opaque substrates includes so-called synthetic paper, like the Synaps^{™} grades from Agfa-Gevaert which is an opaque polyethylene terephthalate sheet.

There is no restriction on the shape of the substrate. It can be a flat sheet, such a glass sheet, or it can be a three dimensional object like a glass bottle.

### Inkjet Printing Methods

An inkjet printing method according to a preferred embodiment of the invention includes the steps of: a) jetting one or more free radical curable inkjet inks as described above on a substrate, preferably a glass substrate; and b) UV curing or electron beam curing the one or more free radical curable inkjet on the substrate.

In a preferred embodiment, the inkjet printing method uses substrate having an aluminum surface or a glass surface on which the one or more free radical curable inkjet inks are jetted.

For reliability and productivity, the free radical curable inkjet ink jetted as described above on a substrate; is UV cured by a UV light-emitting diode having an emission peak wavelength in a range of 350 to 420 nm. The UV curing is preferably performed by UV LEDs having an emission wavelength larger than 360 nm, preferably larger than 370 nm.

The free radical curable inkjet inks are jetted by one or more print heads ejecting small droplets in a controlled manner through nozzles onto a substrate moving relative to the print head(s).

For improved productivity, the print head for the inkjet printing system is preferably a piezoelectric head that can eject ink droplets at high frequencies. Piezoelectric inkjet printing is based on the movement of a piezoelectric ceramic transducer when a voltage is applied thereto. The application of a voltage changes the shape of the piezoelectric ceramic transducer in the print head creating a void, which is then filled with inkjet ink or liquid. When the voltage is again removed, the ceramic expands to its original shape, ejecting a drop of ink from the print head.

A preferred piezoelectric print head is a so called push mode type piezoelectric print head, which has a rather large piezo-element capable of ejecting also more viscous inkjet ink droplets. Such a print head is, for example, available from RICOH as the GEN5s print head.

A preferred piezoelectric print head is a so-called through-flow piezoelectric drop-on-demand print head. Such a print head is available from TOSHIBA TEC as the CF1ou print head. Through-flow print heads are preferred because they enhance the reliability of inkjet printing.

The inkjet print head normally scans back and forth in a transversal direction across the moving ink-receiver surface. Sometimes the inkjet print head does not print on the way back, however bi-directional printing is preferred for obtaining a high areal throughput.

Another preferred printing method is by a "single pass printing process", which can be performed by using page wide inkjet print heads or multiple staggered inkjet print heads that cover the entire width of the substrate surface. In a single pass printing process, the inkjet print heads usually remain stationary and the substrate is transported under the inkjet print heads. Single pass inkjet printing allows for very high productivity, as transporting speeds of the substrate under the print heads can be between 100 and 150 m/min.

In a particularly preferred embodiment, the inkjet printing of the free radical curable inkjet inks is performed in a multi-pass printing mode. Multi-pass printing is a technique used to reduce banding in ink-jet printing. Dots of ink, when still in liquid form, tend to run together due to surface tension. This is referred to as coalescence. To print a high quality image, it is important to print individual round dots. But to achieve full saturated colours, the dots must overlap to completely cover the substrate. By only printing a portion of the image data so as to avoid simultaneously printing adjacent dots during each printing cycle, coalescence may be largely avoided. Additionally, by avoiding all horizontal adjacencies, the transverse speed of the printing mechanism can be increased up to two times the rated print speed of the print head. In a preferred embodiment, the number of passes used is to 2 to 6 passes, more preferably no more than 4 passes.

An advantage of using a multi-pass printing mode is that the UV curable inkjet inks are cured in consecutive passes, rather than in a single pass requiring a curing device with a high UV output. The print head lifetime is also larger for multi pass printing. While in single pass printing one side shooter is sufficient to replace the whole print head, in multi pass printing side shooters and even failings can be tolerated. Also the cost of a multi-pass printer is usually much lower, especially for wide format substrates.

### Curing

The free radical curable inkjet ink is cured by actinic radiation, such as electron beam or UV light. Where two or more free radical curable inkjet inks are printed, the curing step may be performed at each jetting of one ink or may be performed after jetting all inks.

In electron beam curing, the electron particle beam easily reaches the lowermost ink layer in contact with the substrate, when multiple ink layers are deposited on each other. Hence, for obtaining increased productivity, the electron beam curing occurs after that all inkjet inks are jetted on the substrate.

Electron beam exposure means used in the curing step is not particularly limited and a known electron beam irradiation device or electron beam accelerator can be used. As the electron beam irradiation device or electron beam accelerator, a scanning type, double scanning type, or curtain beam type device can be employed, and preferably, a curtain beam type device which is relatively cheap and can obtain a large output can be employed.

[The acceleration voltage of the electron beam in the curing step is preferably 150 kV or less, more preferably 30 to 150 kV, even more preferably 50 to 130 kV, particularly preferably 70 to 110 kV, and most preferably 80 to 110 kV. In a case where the acceleration voltage is within the above range, the substrate is hardly damaged during curing.

The ink is preferably irradiated with the electron beam in the curing step such that the absorbed dose of the electron beam of the dried ink is 30 kGy or less, more preferably 5 to 30 kGy, and particularly preferably 10 to 30 kGy. In such ranges, energy efficiency is excellent, and excellent economic efficiency is obtained.

The irradiation time of the electron beam is not particularly limited as long as the absorbed dose is within the above range.

The atmosphere of the irradiation of the electron beam is not particularly limited but an oxygen concentration of 2% by volume or less is preferable, an oxygen concentration of 1% by volume or less is more preferable, and an oxygen concentration of 300 ppm or less is even more preferable. In a case where the oxygen concentration is within the above range, curability, particularly, surface curability is excellent. It is preferable that the oxygen concentration is adjusted by nitrogen purge.

For minimizing energy consumption, the free radical curable inkjet inks are preferably cured by ultraviolet radiation. The UV curing device may be arranged in combination with the print head of the inkjet printer, travelling therewith so that the UV curable inkjet ink is exposed to curing radiation very shortly after been jetted.

In such an arrangement it can be difficult to provide a small enough UV radiation source connected to and travelling with the print head. Therefore, a static fixed radiation source may be employed, e.g. a source of curing UV-light, connected to the radiation source by means of flexible radiation conductive means such as a fibre optic bundle or an internally reflective flexible tube.

Alternatively, the actinic radiation may be supplied from a fixed source to the radiation head by an arrangement of mirrors including a mirror upon the radiation head.

The source of radiation arranged not to move with the print head, may also be an elongated radiation source extending transversely across the ink-receiver surface to be cured and adjacent the transverse path of the print head so that the subsequent rows of images formed by the print head are passed, stepwise or continually, beneath that radiation source.

Any ultraviolet light source, as long as part of the emitted light can be absorbed by the photo-initiator or photo-initiator system, may be employed as a radiation source, such as, a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

In a preferred embodiment, the UV curing is performed using UV LEDs, particularly those having an emission wavelength higher than 370 nm. UV LEDs usually also come in a compact structure allowing them to travel along with the print heads in a multi-pass printer

UV radiation is generally classed as UV-A, UV-B, and UV-C as follows:
- UV-A: 400 nm to 320 nm
- UV-B: 320 nm to 290 nm
- UV-C: 290 nm to 100 nm.

Furthermore, it is possible to cure the image using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages, such as a fast curing speed and a high curing degree.

For facilitating curing, the inkjet printer often includes one or more oxygen depletion units. The oxygen depletion units place a blanket of nitrogen or other relatively inert gas (e.g. CO₂), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

### EXAMPLES

### Materials

All materials used in the following examples were readily available from standard sources such as SIGMA-ALDRICH, MERCK and ACROS ORGANICS unless otherwise specified. The water used was demineralized water.

TIO2 is a titanium dioxide pigment available as Tronox^{™} CR834 from TRONOX PIGMENTS BV.

E7701 is a polyacrylate dispersion agent available as Efka^{™} 7701 from BASF.

PEA is 2-phenoxyethyl acrylate available as Sartomer^{™} SR339C from ARKEMA.

IBOA is isobornylacrylate available as Sartomer^{™} SR506D from ARKEMA.

VCL is N-vinyl caprolactam available from BASF BELGIUM, NV.

VEEA is 2-(2'-vinyloxyethoxy)ethyl acrylate, a difunctional monomer available from NIPPON SHOKUBAI, Japan.

DPGDA is dipropylene glycol diacrylate available as Sartomer^{™} SR508 from ARKEMA.

CN963B80 is a urethane acrylate oligomer available as Sartomer^{™} CN963B80 from ARKEMA.

CN3755 is an acrylated amine synergist available as Sartomer^{™} CN 3755 from ARKEMA.

TPO is trimethylbenzoyl diphenyl phosphine oxide supplied as Omnirad^{™} TPO by IGM.

INHIB is a mixture forming a polymerization inhibitor having a composition according to Table 1.

**Table 1**

| **Component** | **wt%** |
|---|---|
| DPGDA | 82.4 |
| p-methoxyphenol | 4.0 |
| BHT | 10.0 |
| Cupferron^{™} AL | 3.6 |

**Cupferron^{™} AL** is aluminum N-nitrosophenylhydroxylamine from WAKO CHEMICALS LTD.

**T410** is a silicone surfactant available as Tegoglide^{™} 410 from EVONIK.

**CAP-1A** is Sipomer^{™} PAM100 from SOLVAY including a methacrylated adhesion promotor having as structural formula: 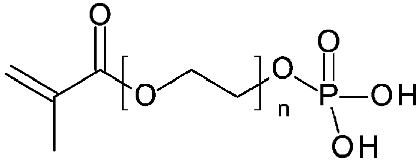 with n=8.

**AP-1** is Sipomer^{™} PAM4000 from SOLVAY including a methacrylated adhesion promotor having as structural formula: 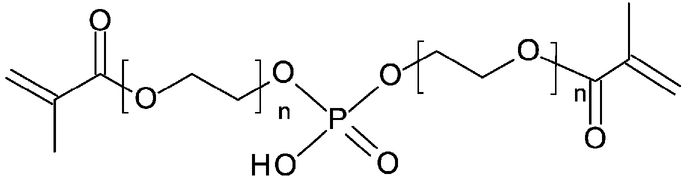 with n=1.

**Vazo** 67 is 2,2'-Azobis(2-methylbutyronitrile) available as a catalyst from MERCK.

**CAP-1B** is an adhesion promotor having the following structural formula:

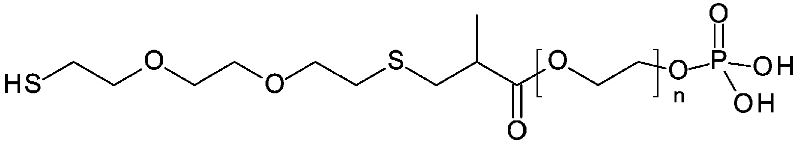

The adhesion promotor CAP-1B was prepared according to the following reaction scheme and reaction conditions:

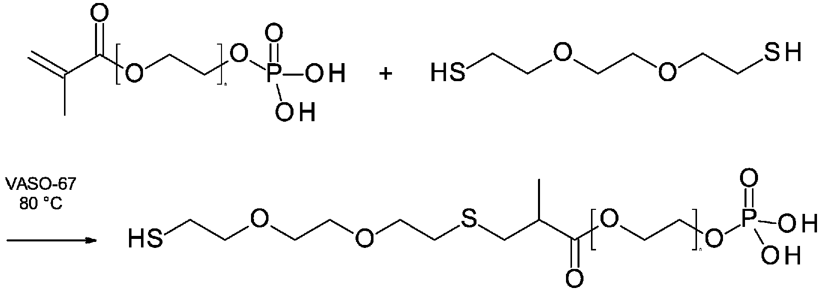

In a 500 mL 3-neck flask 2.067 g of 3,6-dioxa-1,8-octanedithiol was added to 5.453 g of Sipomer^{™} PAM100. The mixture was flushed with nitrogen and stirred for 15 minutes at room temperature. The temperature was then brought to 80°C, after which 0.001g of 2,2'-Azobis(2-methylbutyronitrile) was added. The reaction was left to proceed at 80°C overnight. Proton NMR analysis reveals that the reaction went to completion and no more Sipomer^{™} PAM100 is present. The product is used as such.

**CAP-1C** is an adhesion promotor having as structural formula: 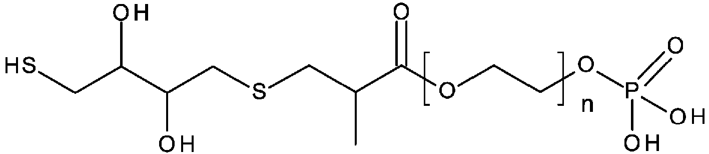 and was synthesized in a similar way as CAP-1B by reacting DL-dithiothreitol with Sipomer^{™} PAM100 in 1:1 molar ratio.

**CAP-1D** is an adhesion promotor having as structural formula: 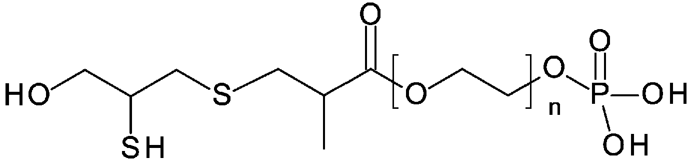 and was synthesized in a similar way as CAP-1B by reacting DL-dithiothreitol with Sipomer^{™} PAM100 in 1:1 molar ratio.

**CAP-1E** is 1,4-bis(3-mercaptobutyryloxy)butane available as Karenz^{™} MT BD1 from SHOWA DENKO having as structural formula:

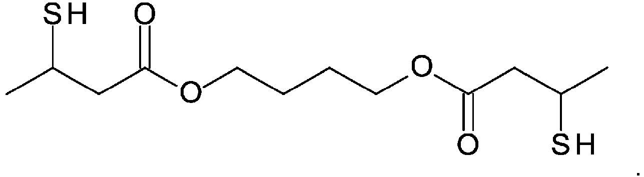

**CAP-1F** is an adhesion promotor having as structural formula: 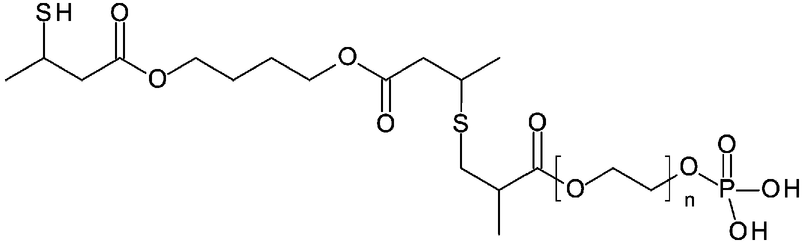 and was synthesized in a similar way as CAP-1B by reacting CAP-1E with Sipomer^{™} PAM100 in 1:1 molar ratio.

**CAP-2A** is CAS 590678-06-1 available as Karenz^{™} MT TPMB from SHOWA DENKO having as structural formula:

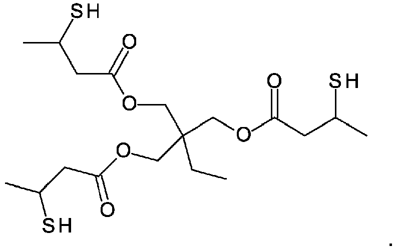

**CAP-2B** is an adhesion promotor having as structural formula: 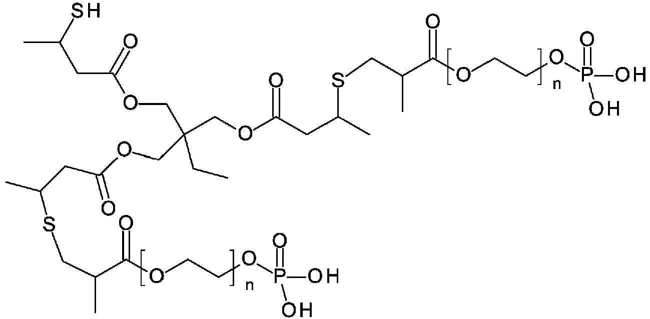 and was synthesized in a similar way as CAP-1B by reacting CAP-2A with Sipomer^{™} PAM100 in 1:2 molar ratio.

**CAP-3A** is pentaerythritol tetrakis (3-mercaptobutylate) available as Karenz^{™} MT PE1 from SHOWA DENKO and having as structural formula:

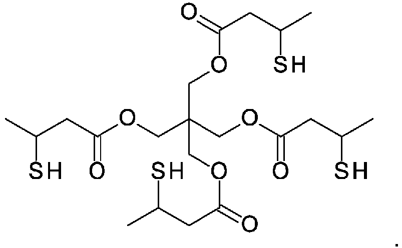

**CAP-3B** is an adhesion promotor having as structural formula: 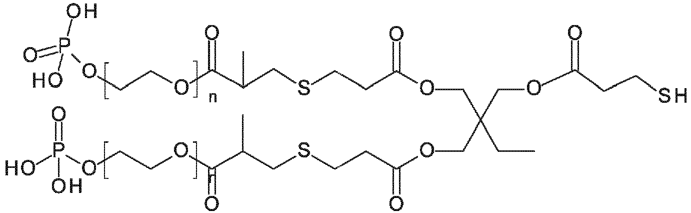 and was synthesized in a similar way as CAP-1B by reacting CAP-2A with Sipomer^{™} PAM100 in 1:2 molar ratio.

**CAP-5** is pentaerythritol tetrakis(3-mercaptopropionate) available from SIGMA-ALDRICH and having as structural formula:

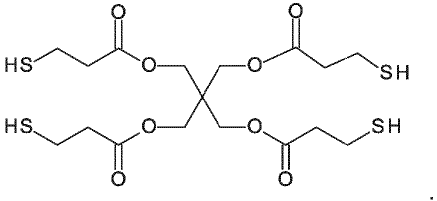

**CAP-7** is 1,3,5-tris(2-(3-sulfanylbutanoyloxy)ethyle)1,3,5-triazinane2,4,6-trione available as Karenz^{™} MT NR1 from SHOWA DENKO and having as structural formula:

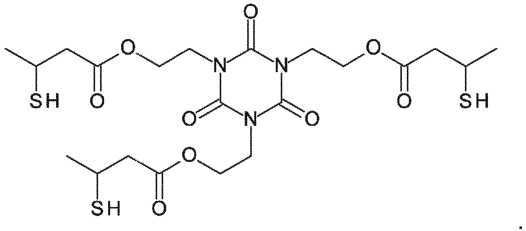

Karenz^{™} MT TPMB is CASRN590678-06-1 available from SHOWA DENKO.

Karenz^{™} MT PE-1 is CASRN1027326-93-7 available from SHOWA DENKO.

Karenz^{™} MT NR 1 is CASRN928339-75-7 available from SHOWA DENKO.

Glass substrate was 3 mm float glass for which the surface was cleaned with isopropanol.

Aluminum substrate wat a 100 µm aluminum plate for which the surface was cleaned with isopropanol.

### Measurement methods

### 1. Adhesion (ADH)

Adhesion was tested on a cured ink sample using a cross hatch cutter set Elcometer^{™} 1542. The distance between the applied scratches is 1 mm. A 5 cm long strip of Tesatape^{™} 4104 PVC tape was pressed on to the cross cut inkjet ink. The tape was pressed three times with the thumb before removing it in one sharp pull. The adhesion was then evaluated in accordance with the evaluation values described in Table 2.

**Table 2**

| **Evaluation** | **Observation** |
|---|---|
| **A** | Nothing removed, perfect adhesion. |
| **B** | Detachment of only small parts of the inkjet ink coating, good adhesion. |
| **C** | Parts of the inkjet ink coating were removed by the tape, poor adhesion. |

For a good adhesion result, the score should be at least "B" and preferably "A".

### 2. Solvent Resistance (SR)

Solvent resistance can be considered as representing a kind of "wet" adhesion. It was tested on a cured ink sample by applying 2 mL of ethyl acetate on a 2 x 2 cm area and after waiting for 3 minutes, wiping the area with a cotton swab (Q-tip). The solvent resistance was evaluated in accordance with the evaluation values described in Table 3.

**Table 3**

| **Evaluation** | **Observation** |
|---|---|
| **A** | No damage visible |
| **B** | Small wiping marks |
| **C** | Parts of the inkjet ink coating were removed by wiping |

For a good adhesion result, the score should be at least "B" and preferably "A".

### 3. Stickiness (ST)

The stickiness was evaluated by using a latex glove and pressing with a finger on the surface of the cured inkjet ink coating in accordance with the evaluation values described in Table 3.

**Table 3**

| **Evaluation** | **Observation** |
|---|---|
| **A** | No damage visible |
| **B** | Small markings visible from pressing on the cured inkjet ink coating |
| **C** | Parts of the inkjet ink coating were removed and sticked to the latex glove |

For a good stickiness result, the score should be at least "B" and preferably "A".

### 4. Average Particle Size (AVP)

The average particle size (diameter) was determined with a Brookhaven Instruments Particle Sizer BI90plus based upon the principle of dynamic light scattering. The inkjet ink was diluted with ethyl acetate to a pigment concentration of 0.002 wt%. The measurement settings of the BI90plus were: 5 runs at 23°C, angle of 90°, wavelength of 635 nm and graphics = correction function.

### 5. Viscosity

The viscosity of the UV curable inkjet inks was measured at 45°C and at a shear rate of 1,000 s⁻¹ using a Rotovisco^{™} RV1 viscometer from HAAKE.

### 6. Surface Tension

The static surface tension of the UV curable inkjet inks was measured with a KRÜSS tensiometer K9 from KRÜSS GmbH, Germany at 25°C after 60 seconds;

### EXAMPLE 1

In this example the synthesis of adhesion promotors used in free radical curable inkjet inks in accordance to the invention is illustrated.

### Synthesis of AP-2

0.01 mol of CAP-1A (5.45 g) was added to a 25 mL flask and flushed with nitrogen during 15 minutes. 0.011 Mol of Karenz MT TPMB, CASRN590678-06-1, (5.69 g) and 0.001 mol butylhydroxytoluene (0.11 g) were added subsequently. The mixture was heated to 80 °C in an oil bath. 0.0005 Mol of Vaso-67 (0.096 g) is added to initiate the reaction and the mixture is further stirred during 16 hours at 70 °C. ¹H NMR Analysis reveals that all methacrylate groups are converted to the desired product. The mixture is used as such.

### Synthesis of AP-3

0.01 mol of CAP-1A (5.45 g) was added to a 25 mL flask and flushed with nitrogen during 15 minutes. 0.011 mol of Karenz^{™} MT PE-1 (6.0 g) and 0.001 mol butylhydroxytoluene (0.11 g) were added subsequently. The mixture was heated to 80 °C in an oil bath. 0.001 Mol of Vaso-67 (0.19 g) is added to initiate the reaction and the mixture is further stirred during 1 hour at 80 °C, after which it is left to react at 65°C during 14 hours. ¹H NMR Analysis reveals that all methacrylate groups are converted to the desired product. The mixture is used as such.

### Synthesis of AP-4

0.019 mol of CAP-1A (10.36 g) was added to a 25 mL flask and flushed with nitrogen during 15 minutes. 0.011 mol of Karenz^{™} MT PE-1 (6.0 g) and 0.001 mol butylhydroxytoluene (0.11 g) were added subsequently. The mixture was heated to 80 °C in an oil bath. 0.001 Mol of Vaso-67 (0.19 g) is added to initiate the reaction and the mixture is further stirred during 1 hour at 80 °C, after which it is left to react at 65 °C during 14 hours. ¹H NMR Analysis reveals that all methacrylate groups are converted to the desired product. The mixture is used as such.

### Synthesis of AP-5

0.019 mol of CAP-1A (10.36 g) was added to a 150 mL flask and flushed with nitrogen during 15 minutes. 0.021 mol of pentaerythritol tetrakis(3-mercaptopropionate), CASRN7575-23-7, (10.5 g) and 0.042 g of butylhydroxytoluene were added subsequently. The mixture was heated to 80 °C in an oil bath. 0.001 g of Vaso-67 is added to initiate the reaction and the mixture is further stirred during 4 hours at 80 °C, after which it is left to react at 70 °C during 14 hours. ¹H NMR Analysis reveals that all methacrylate groups are converted to the desired product. The mixture is used as such.

### Synthesis of AP-6

0.019 mol of CAP-1A (10.36 g) was added to a 100 mL flask and flushed with nitrogen during 15 minutes. 0.01 mol of pentaerythritol tetrakis(3-mercaptopropionate), CASRN7575-23-7, (5.26 g) and 0.21 g of butylhydroxytoluene were added subsequently. The mixture was heated to 80 °C in an oil bath. 0.18 g of Vaso-67 is added to initiate the reaction and the mixture is further stirred during 30 minutes at 80 °C, after which it is left to react at 70 °C during 16 hours. ¹H NMR Analysis reveals that all methacrylate groups are converted to the desired product. The mixture is used as such.

### Synthesis of AP-7

0.008 mol of CAP-1A (4,36 g) was added to a 150 mL flask and flushed with nitrogen during 15 minutes. 0.009 mol of Karenz^{™} MT NR 1 (5.25 g) was added after which the mixture was heated to 80 °C in an oil bath. 0.17 g of Vaso-67 is added to initiate the reaction; after which it is left to react at 65 °C during 7 hours. ¹H NMR Analysis reveals that all methacrylate groups are converted to the desired product. The mixture is used as such.

### EXAMPLE 2

This example illustrates the improvements obtained with free radical curable inkjet inks in accordance to the invention on a glass substrate.

### Preparation of a white free radical inkjet ink Ink-W

A concentrated white pigment dispersion W1 was prepared having a composition according to Table 4.

**Table 4**

| **wt% of :** | **W1** |
|---|---|
| **TIO2** | 50.0 |
| **E7701** | 4.0 |
| **INHIB** | 1.0 |
| **PEA** | 45.0 |

The concentrated white pigment dispersion W1 was prepared by mixing the ingredients of Table 4 for 30 minutes in a vessel equipped with a DISPERLUX^{™} disperser (from DISPERLUX S.A.R.L., Luxembourg). The polymeric dispersant E7701 was added as a 30% solution in PEA. This mixture was subsequently milled in a DYNO^{™}-MILL ECM Poly from the company WAB Willy A. Bachofen (Switzerland) using 0.40 mm yttrium-stabilized zirconium oxide-beads. The bead mill was filled for 42% with the grinding beads and operated in recirculation mode with a residence time of 10 minutes and using a tip speed of 15 m/s. The milling chamber is water-cooled during the operation.

The concentrated white pigment dispersion W1 was then mixed with the components according to Table 5 to produce a free radical curable white inkjet ink Ink-W. The viscosity, surface tension and the average particle size of the white inkjet ink Ink-W were determined.

**Table 5**

| **wt% of :** | **Ink-W** |
|---|---|
| **TIO2** | 16.00 |
| **E7701** | 1.28 |
| **IBOA** | 23.90 |
| **VCL** | 9.50 |
| **VEEA** | 5.00 |
| **PEA** | 26.02 |
| **CN963B80** | 5.00 |
| **TPO** | 6.00 |
| **CN3755** | 6.00 |
| **INHIB** | 1.00 |
| **T410** | 0.30 |

| **Physical properties** | |
|---|---|
| **Viscosity at 45°C** | 10 mPa.s |
| **Surface tension 25°C** | 23 mN/m |
| **Average particle size** | 240 nm |

### Preparation of white free radical curable inkjet inks

The free radical curable inkjet inks INK-1 to INK-34 were prepared according to one of the ink compositions A to E in Table 6. The weight percentage (wt%) is based on the total weight of the resulting inkjet ink.

**Table 6**

| **wt% of** | **Ink composition** | | | | |
|---|---|---|---|---|---|
| | **A** | **B** | **C** | **D** | **E** |
| **Ink-W** | 100 | 99 | 98 | 95 | 90 |
| **Adhesion promotor** | 0 | 1 | 2 | 5 | 10 |

### Evaluation and Results

The UV cured samples of the free radical curable white inkjet inks INK-1 to INK-34 were evaluated for solvent resistance (SR), stickiness (ST) and adhesion (ADH) on glass. The test results are shown in Table 7, wherein #Phos represents the number of polymerizable groups, i.e. the number of methacrylate groups or thiol groups, and #Phos represents the number of phosphate groups.

**Table 7**

| **Inkjet ink** | **Adhesion Promotor** | | **#Pol** | **#Phos** | **Test results** | | |
|---|---|---|---|---|---|---|---|
| | **Type** | **wt%** | | | **SR** | **ST** | **ADH** |
| **INK-1** | --- | 0 | 0 | 0 | C | A | C |
| **INK-2** | CAP-1A | 2 | 1 | 1 | B | A | C |
| **INK-3** | CAP-1A | 10 | 1 | 1 | B | C | C |
| **INK-4** | CAP-1B | 1 | 1 | 1 | C | A | C |
| **INK-5** | CAP-1B | 2 | 1 | 1 | C | A | C |
| **INK-6** | CAP-1C | 1 | 1 | 1 | C | A | C |
| **INK-7** | CAP-1C | 5 | 1 | 1 | C | A | C |
| **INK-8** | CAP-1D | 2 | 1 | 1 | B | A | C |
| **INK-9** | CAP-1D | 5 | 1 | 1 | B | A | C |
| **INK-10** | CAP-1E | 2 | 2 | 0 | B | A | C |
| **INK-11** | CAP-1F | 2 | 1 | 1 | B | A | C |
| **INK-12** | CAP-2A | 1 | 3 | 0 | B | A | C |
| **INK-13** | CAP-2A | 2 | 3 | 0 | B | A | C |
| **INK-14** | CAP-2B | 1 | 1 | 2 | C | A | C |
| **INK-15** | CAP-2B | 2 | 1 | 2 | C | A | C |
| **INK-16** | CAP-3A | 2 | 4 | 0 | B | A | C |
| **INK-17** | CAP-3A | 5 | 4 | 0 | B | A | C |
| **INK-18** | CAP-3B | 1 | 1 | 2 | B | A | C |
| **INK-19** | CAP-3B | 5 | 1 | 2 | B | A | C |
| **INK-20** | CAP-5 | 5 | 4 | 0 | B | A | C |
| **INK-21** | CAP-7 | 5 | 3 | 0 | B | A | C |
| **INK-22** | AP-1 | 2 | 2 | 1 | A | A | A |
| **INK-23** | AP-1 | 5 | 2 | 1 | A | B | A |
| **INK-24** | AP-1 | 10 | 2 | 1 | A | B | A |
| **INK-25** | AP-2 | 1 | 2 | 1 | B | A | A |
| **INK-26** | AP-2 | 2 | 2 | 1 | B | A | A |
| **INK-27** | AP-3 | 2 | 3 | 1 | A | A | A |
| **INK-28** | AP-3 | 5 | 3 | 1 | B | A | A |
| **INK-29** | AP-4 | 2 | 2 | 2 | B | A | B |
| **INK-30** | AP-4 | 5 | 2 | 2 | B | A | A |
| **INK-31** | AP-5 | 5 | 3 | 1 | B | A | B |
| **INK-32** | AP-6 | 5 | 2 | 2 | B | A | B |
| **INK-33** | AP-7 | 5 | 2 | 1 | B | A | B |
| **INK-34** | AP-7 | 10 | 2 | 1 | A | A | A |

From the test results in Table 7, it is clear that only the free radical curable inkjet inks INK-25 to INK-34 in accordance with invention exhibit good results for solvent resistance, stickiness and adhesion on a glass substrate.

### EXAMPLE 3

This example illustrates that improved adhesion is also obtained on other difficult non-absorbing substrates using free radical curable inkjet inks in accordance to the invention.

### Preparation of white inkjet inks

The free radical curable inkjet inks INK-35 to INK-52 were prepared in the same manner as in EXAMPLE 1 according to one of the ink compositions A to C in Table 6.

### Evaluation and Results

The inkjet inks INK-35 to INK-52 were coated on an aluminum substrate using a bar coater and a 30 µm wired bar. Each coated sample was cured using a Fusion DRSE-120 conveyer, equipped with a Fusion VPS/I600 lamp (D-bulb), which transported the samples under the UV-lamp on a conveyer belt at a speed of 20 m/min.

The UV cured samples of inkjet inks INK-35 to INK-52 were evaluated for solvent resistance (SR), stickiness (ST) and adhesion (ADH) on glass. The test results are shown in Table 8, wherein #Pol represents the number of methacrylate groups or thiol groups, and #Phos represents the number of phosphate groups.

**Table 8**

| **Inkjet ink** | **Adhesion promotor** | | **#Pol** | **#Phos** | **Test results** | | |
|---|---|---|---|---|---|---|---|
| | **Type** | **wt%** | | | **SR** | **ST** | **ADH** |
| **INK-35** | --- | 0 | 0 | 0 | B | A | C |
| **INK-36** | CAP-1B | 2 | 1 | 1 | C | A | C |
| **INK-37** | CAP-1C | 1 | 1 | 1 | C | A | C |
| **INK-38** | CAP-1D | 2 | 1 | 1 | B | A | C |
| **INK-39** | CAP-1E | 2 | 2 | 0 | B | A | C |
| **INK-40** | CAP-1F | 2 | 1 | 1 | A | A | C |
| **INK-41** | CAP-2A | 2 | 3 | 0 | B | A | C |
| **INK-42** | CAP-3A | 2 | 4 | 0 | B | A | C |
| **INK-43** | CAP-3B | 1 | 1 | 2 | B | A | C |
| **INK-44** | CAP-5 | 1 | 4 | 0 | C | A | C |
| **INK-45** | CAP-7 | 2 | 3 | 0 | B | A | C |
| **INK-46** | AP-1 | 2 | 2 | 1 | A | A | A |
| **INK-47** | AP-2 | 2 | 2 | 1 | A | A | A |
| **INK-48** | AP-3 | 2 | 3 | 1 | A | A | A |
| **INK-49** | AP-4 | 2 | 2 | 2 | A | A | A |
| **INK-50** | AP-5 | 1 | 3 | 1 | B | A | A |
| **INK-51** | AP-6 | 1 | 2 | 2 | B | A | A |
| **INK-52** | AP-7 | 2 | 2 | 1 | A | A | A |

The test results in Table 8 show that only the free radical curable inkjet inks INK-47 to INK-52 in accordance with invention exhibit good results for solvent resistance, stickiness and adhesion on an aluminum substrate, even though only small amounts of 1 to 2 wt% of adhesion promotor is used.

## Claims

1. A free radical curable inkjet ink containing
a) a colour pigment;
b) polymerizable compounds having an acrylate group; and
c) an adhesion promotor having a molecular weight of not more than 5,000 g/mol in an amount of 1 to 15 wt% based on the total weight of the free radical curable inkjet ink;
wherein the adhesion promotor is a compound having 1 or 2 phosphate groups and further having at least 2 thiol groups.

2. The free radical curable inkjet ink as claimed in claim 1, wherein the adhesion promotor is a compound according to Formula I: 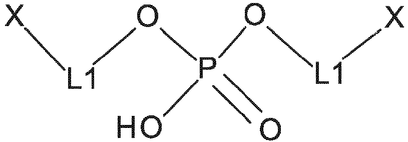 or Formula II: 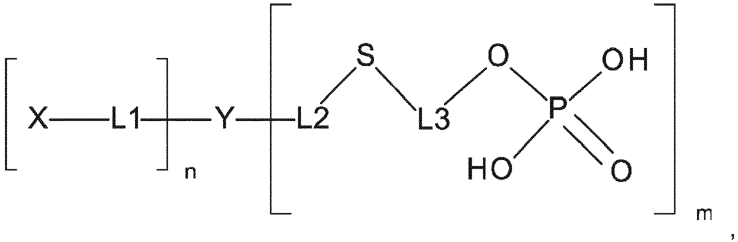
wherein n is 2 or 3; m is 1 or 2; z is the sum of n and m and z is 3 or 4;
Y represents a z-valent core having 1 to 12 atoms; X represents a thiol group; and L1, L2 and L3 each independently represent a straight-chain or branched C₂-C₁₂-alkanediyl group optionally interrupted by one or two oxygen atoms and/or by one carboxyl group.

3. The free radical curable inkjet ink as claimed in claim 2, wherein L1 to L3 are each independently selected from the group consisting of -CH₂-CH₂-, -CH₂-CH₂-O-CH₂-CH₂-, -CH₂-CH₂-O-CH₂-CH₂-O-CH₂-CH₂-, -CH₂-CH₂-(C=O)-O-CH₂-, -CH₂-CH₂-(C=O)-O-CH₂-CH₂-, -CH(CH₃)-CH₂-(C=O)-O-CH₂-, - CH(CH₃)-CH₂-(C=O)-O-CH₂-CH₂-.
CH₂-CH(CH₃)-(C=O)-O-CH₂-CH₂-, CH₂-CH(CH₃)-(C=O)-O-CH₂-CH₂-O-CH₂-CH₂-, CH₂-CH(CH₃)-(C=O)-O-CH₂-CH₂-O-CH₂-CH₂-O-CH₂-CH₂- and CH₂-CH(CH₃)-(C=O)-O-CH₂-CH₂-O-CH₂-CH₂-O-CH₂-CH₂-O-CH₂-CH₂-.

4. The free radical curable inkjet ink as claimed in claim 2 or 3, wherein the Z-valent core represents a carbon atom or an isocyanurate group

5. The free radical curable inkjet ink as claimed in claim 1, wherein the adhesion promotor is selected from the group consisting of: 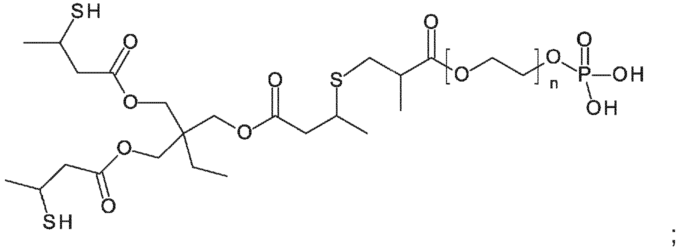 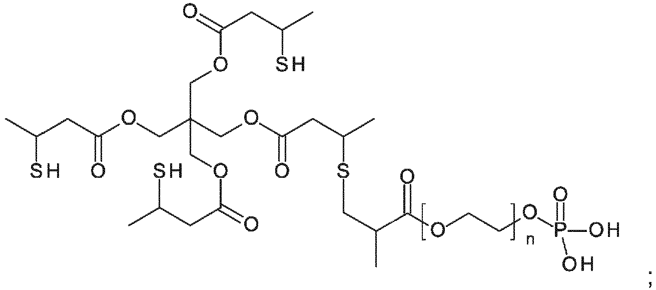 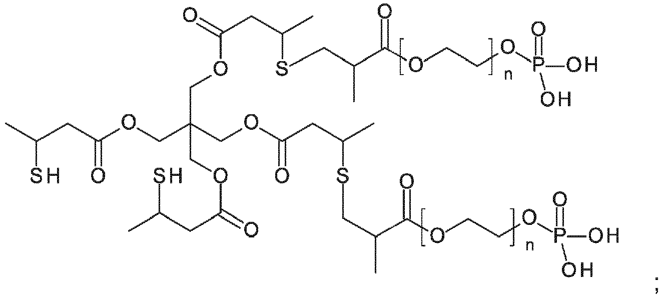 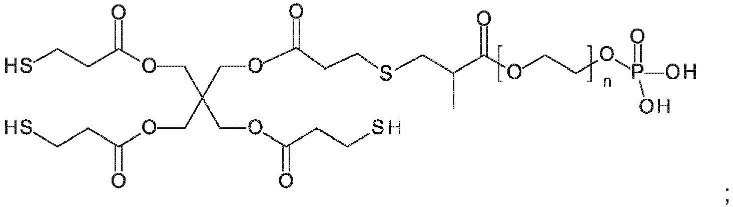 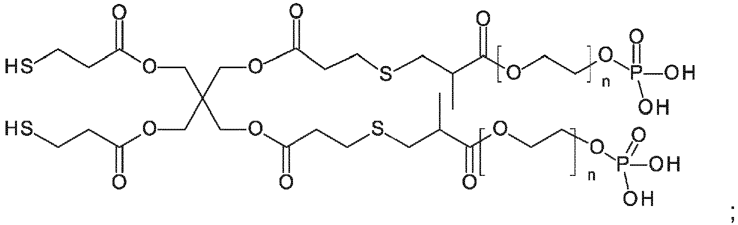 and 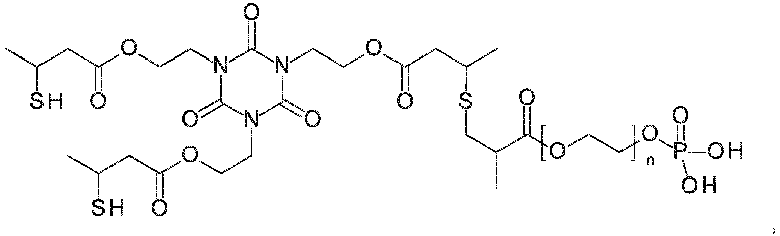 wherein for each adhesion promotor the value of the integer n is 1 to 15.

6. The free radical curable inkjet ink as claimed in any one of claims 1 to 5, wherein the colour pigment is a white pigment, preferably a titanium dioxide pigment.

7. The free radical curable inkjet ink as claimed in any one of claims 1 to 5, wherein the colour pigment is selected from the group consisting of carbon black, C.I. Pigment Blue 15:3, C.I. Pigment Blue 15:4, a quinacridone or a mixed crystal thereof, a diketopyrrolopyrrole pigment or a mixed crystal thereof, C.I. Pigment Yellow 83, C.I. Pigment Yellow 97, C.I. Pigment Yellow 110, C.I. Pigment Yellow 120, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213 and C.I. Pigment Yellow 214.

8. The free radical curable inkjet ink as claimed in any one of claims 1 to 7, wherein the free radical curable inkjet ink contains a photoinitiator including a photoinitiating moiety selected from the group consisting of acyl phosphine oxide moiety, α-hydroxyketone moiety, thioxanthone moiety and a carbazole moiety.

9. The free radical curable inkjet ink as claimed in any one of claims 1 to 5, wherein more than 30 wt%, preferably more than 50 wt% of the polymerizable compounds is a monofunctional acrylate monomer and/or monofunctional acrylate oligomer with the wt% based on the total weight of the polymerizable composition.

10. A free radical curable inkjet ink set including one or more free radical curable inkjet inks as claimed in any one of claims 1 to 9.

11. The free radical curable inkjet ink set as claimed in claim 10, including a white inkjet ink.

12. The free radical curable inkjet ink set as claimed in claim 10 or 11, including a black inkjet ink containing carbon black, a cyan inkjet ink containing C.I. Pigment Blue 15:3 or C.I. Pigment Blue 15:4, a magenta or red inkjet ink containing a quinacridone or a mixed crystal thereof or a diketopyrrolopyrrole pigment or a mixed crystal thereof; and a yellow inkjet ink containing a yellow pigment selected from the group consisting of C.I. Pigment Yellow 83, C.I. Pigment Yellow 97, C.I. Pigment Yellow 110, C.I. Pigment Yellow 120, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213 and C.I. Pigment Yellow 214.

13. An inkjet printing method including the steps of:
a) jetting one or more free radical curable inkjet inks as claimed in any one of claims 1 to 9 on a substrate; and
b) UV curing or electron beam curing the one or more free radical curable inkjet on the substrate.

14. The inkjet printing method as claimed in claim 13, wherein the substrate has an aluminum surface or a glass surface on which the one or more free radical curable inkjet inks are jetted.

15. A method of manufacturing a free radical curable inkjet ink as claimed in any one claims 1 to 9 including the steps of:
a) preparing a pigment dispersion by dispersing a colour pigment in one or more polymerizable compounds having an acrylate group; and
b) adding an adhesion promotor to the pigment dispersion.

## Patentansprüche

1. Eine durch freie Radikale härtbare Tintenstrahltinte, enthaltend
a) ein Farbpigment,
b) polymerisierbare Verbindungen mit einer Acrylatgruppe, und
c) ein haftungsförderndes Mittel mit einem Molekulargewicht von nicht mehr als 5.000 g/Mol in einer Menge zwischen 1 Gew.-% und 15 Gew.-%, bezogen auf das Gesamtgewicht der durch freie Radikale härtbaren Tintenstrahltinte,
wobei das haftungsfördernde Mittel eine Verbindung mit 1 oder 2 Phosphatgruppen ist und ferner mindestens 2 Thiolgruppen enthält.

2. Die durch freie Radikale härtbare Tintenstrahltinte nach Anspruch 1, wobei das haftungsfördernde Mittel eine Verbindung gemäß Formel I: 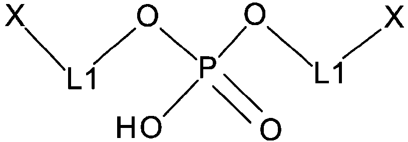 oder Formel II ist: 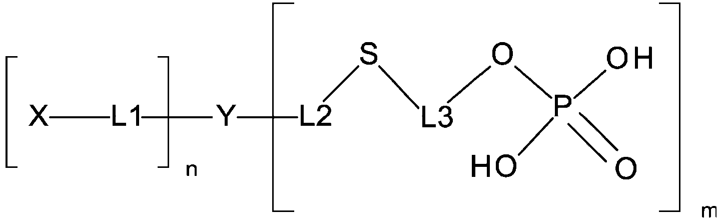
in denen n 2 oder 3 bedeutet, m 1 oder 2 bedeutet, z die Summe von n und m ist und z 3 oder 4 bedeutet,
Y einen z-valenten Kern mit 1 bis 12 Atomen bedeutet, X eine Thiolgruppe bedeutet und L1, L2 und L3 unabhängig voneinander jeweils eine geradkettige oder verzweigte, gegebenenfalls durch ein oder zwei Sauerstoffatome und/oder durch eine Carboxylgruppe unterbrochene C₂-C₁₂-Alkandiylgruppe bedeuten.

3. Die durch freie Radikale härtbare Tintenstrahltinte nach Anspruch 2, wobei L1 bis L3 unabhängig voneinander jeweils aus der Gruppe bestehend aus -CH₂-CH₂-, -CH₂-CH₂-O-CH₂-CH₂-, -CH₂-CH₂-O-CH₂-CH₂-O-CH₂-CH₂-, -CH₂-CH₂-(C=O)-O-CH₂-, -CH₂-CH₂-(C=O)-O-CH₂-CH₂-, -CH(CH₃)-CH₂-(C=O)-O-CH₂-, -CH(CH₃)-CH₂-(C=O)-O-CH₂-CH₂-.
CH₂-CH(CH₃)-(C=O)-O-CH₂-CH₂-, CH₂-CH(CH₃)-(C=O)-O-CH₂-CH₂-O-CH₂-CH₂-, CH₂-CH(CH₃)-(C=O)-O-CH₂-CH₂-O-CH₂-CH₂-O-CH₂-CH₂- und
CH₂-CH(CH₃)-(C=O)-O-CH₂-CH₂-O-CH₂-CH₂-O-CH₂-CH₂-O-CH₂-CH₂- ausgewählt werden.

4. Die durch freie Radikale härtbare Tintenstrahltinte nach Anspruch 2 oder 3, wobei der Z-valente Kern ein Kohlenstoffatom oder eine Isocyanuratgruppe bedeutet.

5. Die durch freie Radikale härtbare Tintenstrahltinte nach Anspruch 1, wobei das haftungsfördernde Mittel ausgewählt wird aus der Gruppe bestehend aus: 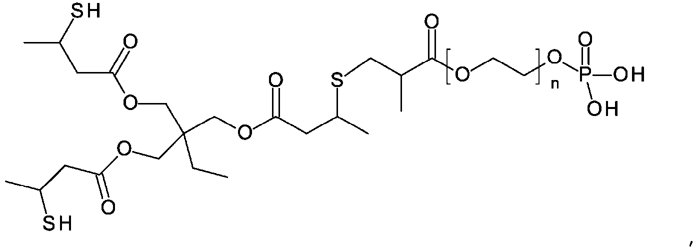 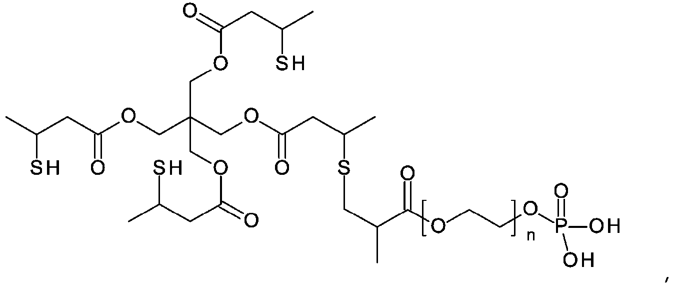 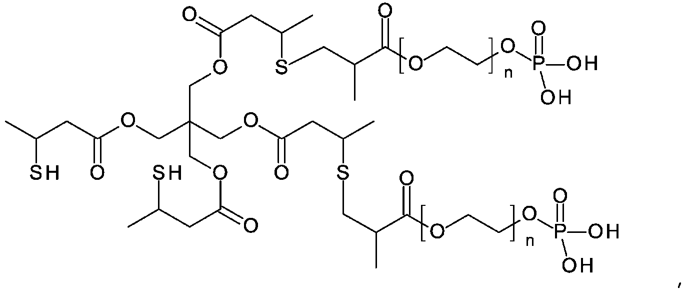 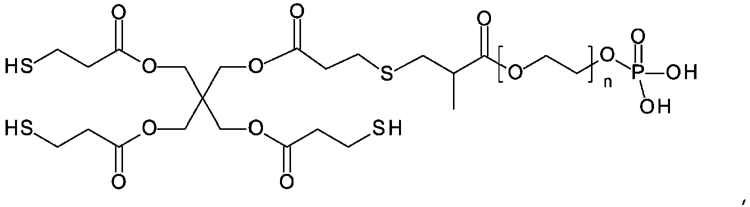 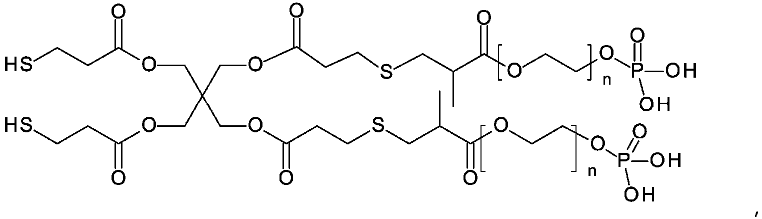 und 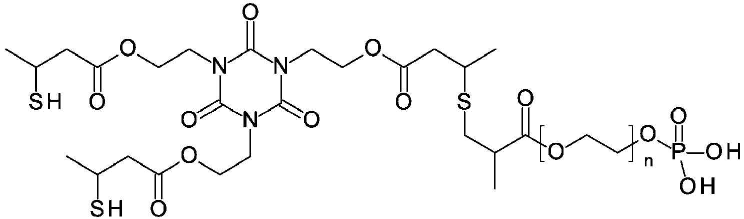 wobei für jedes haftungsfördernde Mittel der Wert der ganzen Zahl n zwischen 1 und 15 liegt.

6. Die durch freie Radikale härtbare Tintenstrahltinte nach einem der Ansprüche 1 bis 5, wobei das Farbpigment ein weißes Pigment ist, bevorzugt ein Titandioxidpigment.

7. Die durch freie Radikale härtbare Tintenstrahltinte nach einem der Ansprüche 1 bis 5, wobei das Farbpigment aus der Gruppe bestehend aus Ruß, C.I. Pigment Blue 15:3, C.I. Pigment Blue 15:4, einem Chinacridonpigment oder einem Mischkristall desselben, einem Diketopyrrolopyrrolpigment oder einem Mischkristall desselben, C.I. Pigment Yellow 83, C.I. Pigment Yellow 97, C.I. Pigment Yellow 110, C.I. Pigment Yellow 120, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213 und C.I. Pigment Yellow 214 ausgewählt wird.

8. Die durch freie Radikale härtbare Tintenstrahltinte nach einem der Ansprüche 1 bis 7, wobei die durch freie Radikale härtbare Tintenstrahltinte einen Fotoinitiator enthält, der einen fotoinitiierenden Rest, ausgewählt aus der Gruppe bestehend aus einem Acylphosphinoxidrest, einem α-Hydroxyketonrest, einem Thioxanthonrest und einem Carbazolrest, enthält.

9. Die durch freie Radikale härtbare Tintenstrahltinte nach einem der Ansprüche 1 bis 5, wobei mehr als 30 Gew.-%, bevorzugt mehr als 50 Gew.-% der polymerisierbaren Verbindungen ein monofunktionelles Acrylatmonomer und/oder ein monofunktionelles Acrylatoligomer ist, wobei der Gewichtsprozentsatz bezogen auf das Gesamtgewicht der polymerisierbaren Zusammensetzung ausgedrückt ist.

10. Ein Satz von durch freie Radikale härtbaren Tintenstrahltinten, der einen oder mehrere durch freie Radikale härtbare Tintenstrahltinten nach einem der Ansprüche 1 bis 9 umfasst.

11. Der Satz von durch freie Radikale härtbaren Tintenstrahltinten nach Anspruch 10, der eine weiße Tintenstrahltinte umfasst.

12. Der Satz von durch freie Radikale härtbaren Tintenstrahltinten nach Anspruch 10 oder 11, enthaltend eine schwarze Tintenstrahltinte, die Ruß enthält, eine Cyantintenstrahltinte, die C.I. Pigment Blue 15:3 oder C.I. Pigment Blue 15:4 enthält, eine Magentatintenstrahltinte oder rote Tintenstrahltinte, die ein Chinacridonpigment oder einen Mischkristall desselben oder ein Diketopyrrolopyrrolpigment oder einen Mischkristall desselben enthält, und eine gelbe Tintenstrahltinte, enthaltend ein gelbes Pigment, ausgewählt aus der Gruppe bestehend aus C.I. Pigment Yellow 83, C.I. Pigment Yellow 97, C.I. Pigment Yellow 110, C.I. Pigment Yellow 120, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213 und C.I. Pigment Yellow 214.

13. Ein Tintenstrahldruckverfahren, das die folgenden Schritte umfasst:
a) Aufsprühen einer oder mehrerer durch freie Radikale härtbarer Tintenstrahltinten nach einem der Ansprüche 1 bis 9 auf ein Substrat, und
b) UV-Härtung oder Elektronenstrahlhärtung der einen oder mehreren durch freie Radikale härtbaren Tintenstrahltinten auf dem Substrat.

14. Das Tintenstrahldruckverfahren nach Anspruch 13, wobei das Substrat eine Aluminiumoberfläche oder eine Glasoberfläche hat, auf die die eine oder mehreren durch freie Radikale härtbaren Tintenstrahltinten aufgesprüht werden.

15. Ein Verfahren zur Herstellung einer durch freie Radikale härtbaren Tintenstrahltinte nach einem der Ansprüche 1 bis 9, das die folgenden Schritte umfasst:
a) Herstellung einer Pigmentdispersion durch Dispergieren eines Farbpigments in einer oder mehreren polymerisierbaren Verbindungen mit einer Acrylatgruppe, und
b) Zugabe eines haftungsfördernden Mittels zur Pigmentdispersion.

## Revendications

1. Encre pour jet d'encre durcissable par radicaux libres contenant
a) un pigment de couleur,
b) des composés polymérisables comprenant un groupe acrylate, et
c) un agent promoteur de l'adhésion ayant un poids moléculaire maximal de 5.000 g/mol dans une quantité comprise entre 1% en poids et 15% en poids par rapport au poids total de l'encre pour jet d'encre durcissable par radicaux libres,
**caractérisée en ce que** l'agent promoteur de l'adhésion est un composé comprenant 1 ou 2 groupes phosphate et contient en outre au moins 2 groupes thiol.

2. Encre pour jet d'encre durcissable par radicaux libres selon la revendication 1, **caractérisée en ce que** l'agent promoteur de l'adhésion est un composé répondant à la Formule I: 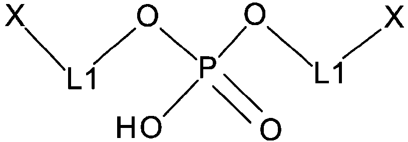 ou à la Formule II: 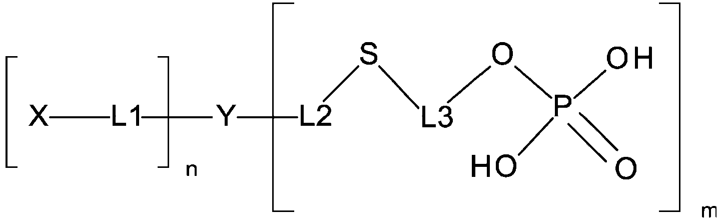
où n représente 2 ou 3, m représente 1 ou 2, z représente la somme de n et m et z représente 3 ou 4,
Y représente un noyau z-valent comprenant 1 à 12 atomes, X représente un groupe thiol et L1, L2 et L3 représentent, l'un indépendamment de l'autre, un groupe alcanediyle en C₂-C₁₂ linéaire ou ramifié éventuellement interrompu par un ou deux atomes d'oxygène et/ou par un groupe carboxyle.

3. Encre pour jet d'encre durcissable par radicaux libres selon la revendication 2, **caractérisée en ce que** L1 à L3 sont choisis, l'un indépendamment de l'autre, parmi le groupe composé de -CH₂-CH₂-, -CH₂-CH₂-O-CH₂-CH₂-, -CH₂-CH₂-O-CH₂-CH₂-O-CH₂-CH₂-, -CH₂-CH₂-(C=O)-O-CH₂-, -CH₂-CH₂-(C=O)-O-CH₂-CH₂-, -CH(CH₃)-CH₂-(C=O)-O-CH₂-, -CH(CH₃)-CH₂-(C=O)-O-CH₂-CH₂-.
CH₂-CH(CH₃)-(C=O)-O-CH₂-CH₂-, CH₂-CH(CH₃)-(C=O)-O-CH₂-CH₂-O-CH₂-CH₂-, CH₂-CH(CH₃)-(C=O)-O-CH₂-CH₂-O-CH₂-CH₂-O-CH₂-CH₂- et CH₂-CH(CH₃)-(C=O)-O-CH₂-CH₂-O-CH₂-CH₂-O-CH₂-CH₂-O-CH₂-CH₂-.

4. Encre pour jet d'encre durcissable par radicaux libres selon la revendication 2 ou 3, **caractérisée en ce que** le noyau Z-valent représente un atome de carbone ou un groupe isocyanurate.

5. Encre pour jet d'encre durcissable par radicaux libres selon la revendication 1, **caractérisée en ce que** l'agent promoteur de l'adhésion est choisi parmi le groupe composé de: 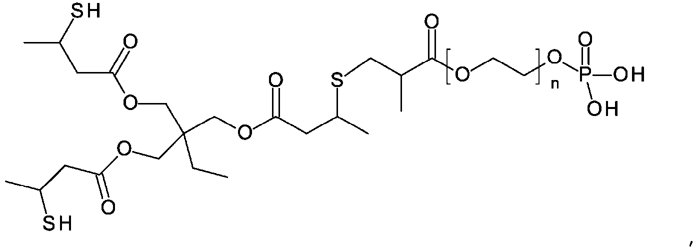 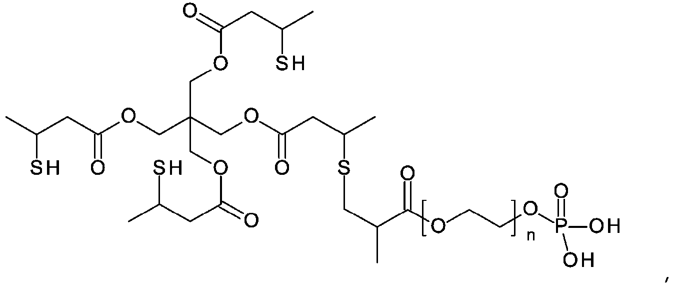 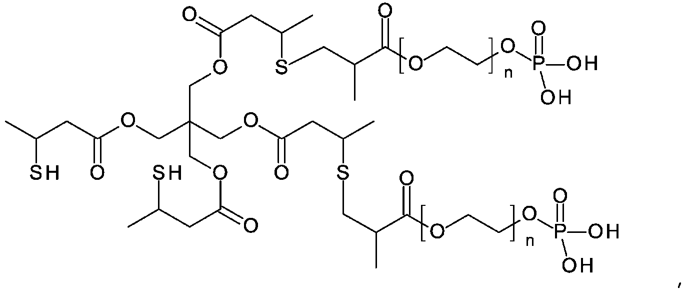 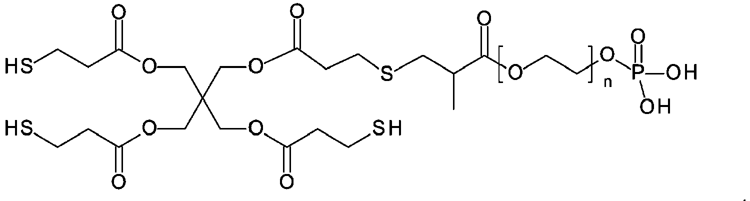 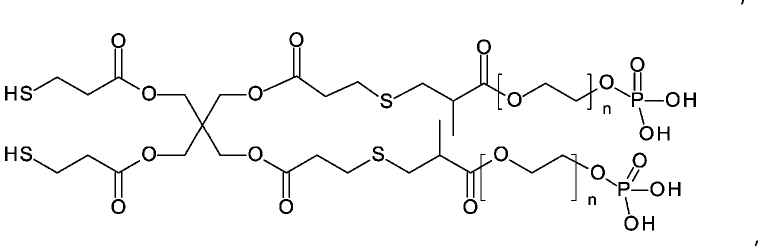 et 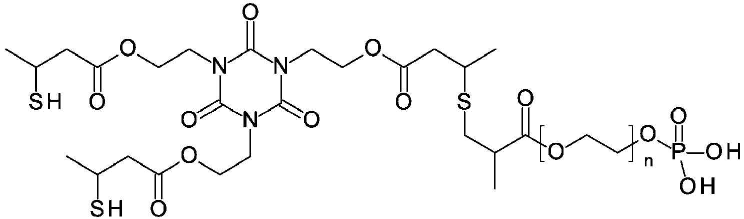 **caractérisée en ce que** la valeur du nombre entier n est comprise entre 1 et 15 pour chaque agent promoteur de l'adhésion.

6. Encre pour jet d'encre durcissable par radicaux libres selon l'une quelconque des revendications 1 à 5, **caractérisée en ce que** le pigment de couleur est un pigment blanc, de préférence un pigment de dioxyde de titane.

7. Encre pour jet d'encre durcissable par radicaux libres selon l'une quelconque des revendications 1 à 5, **caractérisée en ce que** le pigment de couleur est choisi parmi le groupe composé de noir de carbone, C.I. Pigment Blue 15:3, C.I. Pigment Blue 15:4, un pigment de quinacridone ou un cristal mixte de celui-ci, un pigment de dicétopyrrolopyrrole ou un cristal mixte de celui-ci, C.I. Pigment Yellow 83, C.I. Pigment Yellow 97, C.I. Pigment Yellow 110, C.I. Pigment Yellow 120, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213 et C.I. Pigment Yellow 214.

8. Encre pour jet d'encre durcissable par radicaux libres selon l'une quelconque des revendications 1 à 7, **caractérisée en ce que** l'encre pour jet d'encre durcissable par radicaux libres contient un photoinitiateur contenant un groupement photoinitiateur choisi parmi le groupe composé d'un groupement d'oxyde d'acylphosphine, d'un groupement de α-hydroxycétone, d'un groupement de thioxanthone et d'un groupement de carbazole.

9. Encre pour jet d'encre durcissable par radicaux libres selon l'une quelconque des revendications 1 à 5, **caractérisée en ce que** plus de 30% en poids, de préférence plus de 50% en poids des composés polymérisables est un monomère d'acrylate monofonctionnel et/ou un oligomère d'acrylate monofonctionnel, ledit pourcentage en poids étant exprimé par rapport au poids total de la composition polymérisable.

10. Ensemble d'encres pour jet d'encre durcissables par radicaux libres comprenant une ou plusieurs encres pour jet d'encre durcissables par radicaux libres selon l'une quelconque des revendications 1 à 9.

11. Ensemble d'encres pour jet d'encre durcissables par radicaux libres selon la revendication 10 comprenant une encre pour jet d'encre blanche.

12. Ensemble d'encres pour jet d'encre durcissables par radicaux libres selon la revendication 10 ou 11 contenant une encre pour jet d'encre noire contenant du noir de carbone, une encre pour jet d'encre cyan contenant du C.I. Pigment Blue 15:3 ou du C.I. Pigment Blue 15:4, une encre pour jet d'encre magenta ou une encre pour jet d'encre rouge contenant un pigment de quinacridone ou un cristal mixte de celui-ci ou un pigment de dicétopyrrolopyrrole ou un cristal mixte de celui-ci et une encre pour jet d'encre jaune contenant un pigment jaune choisi parmi le groupe composé de C.I. Pigment Yellow 83, C.I. Pigment Yellow 97, C.I. Pigment Yellow 110, C.I. Pigment Yellow 120, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213 et C.I. Pigment Yellow 214.

13. Procédé d'impression par jet d'encre comprenant les étapes consistant à:
a) projeter une ou plusieurs encres pour jet d'encre durcissables par radicaux libres selon l'une quelconque des revendications 1 à 9 sur un substrat, et
b) durcir par rayonnement UV ou par faisceau électronique lesdites une ou plusieurs encres pour jet d'encre durcissables par radicaux libres sur le substrat.

14. Procédé d'impression par jet d'encre selon la revendication 13, **caractérisé en ce que** le substrat comprend une surface d'aluminium ou une surface de verre sur laquelle sont projetées lesdites une ou plusieurs encres pour jet d'encre durcissables par radicaux libres.

15. Procédé de préparation d'une encre pour jet d'encre durcissable par radicaux libres selon l'une quelconque des revendications 1 à 9 comprenant les étapes consistant à:
a) préparer une dispersion de pigment en dispersant un pigment de couleur dans un ou plusieurs composés polymérisables comprenant un groupe acrylate, et
b) ajouter un agent promoteur de l'adhésion à la dispersion de pigment.
